(19) Europäisches Patentamt
European Patent Office
Office européen des brevets

(11) EP 0 574 791 B1

(12) **EUROPÄISCHE PATENTSCHRIFT**

(45) Veröffentlichungstag und Bekanntmachung des Hinweises auf die Patenterteilung:
**22.12.1999 Patentblatt 1999/51**

(51) Int Cl.$^6$: **C08J 5/22**, C08L 71/00, C08G 65/48, H01M 8/02, H01M 8/10, B01D 71/52

(21) Anmeldenummer: **93109139.1**

(22) Anmeldetag: **07.06.1993**

(54) **Polymerelektrolyt-Membran und Verfahren zu ihrer Herstellung**

Polymer electrolyte membrane and process for its manufacture

Membrane d'électrolyte polymère et procédé pour sa fabrication

(84) Benannte Vertragsstaaten:
**BE DE FR GB IT NL**

(30) Priorität: **13.06.1992 DE 4219412**
**17.12.1992 DE 4242692**

(43) Veröffentlichungstag der Anmeldung:
**22.12.1993 Patentblatt 1993/51**

(73) Patentinhaber: **Aventis Research & Technologies GmbH & Co. KG**
**65926 Frankfurt am Main (DE)**

(72) Erfinder:
- **Helmer-Metzmann, Freddy, Dr.**
**W-6500 Mainz (DE)**
- **Osan, Frank, Dr.**
**W-6233 Kelkheim/Ts. (DE)**
- **Schneller, Arnold, Dr.**
**W-6500 Mainz (DE)**
- **Ritter, Helmut Prof.**
**W-5600 Wuppertal (DE)**
- **Ledjeff, Konstantin, Dr.**
**W-7812 Krozingen (DE)**
- **Nolte, Roland, Dr.**
**W-7800 Freiburg (DE)**
- **Thorwirth, Ralf**
**W-5600 Wuppertal 1 (DE)**

(56) Entgegenhaltungen:
**EP-A- 0 041 780** **EP-A- 0 112 725**
**EP-A- 0 139 061** **EP-A- 0 182 506**

- **JOURNAL OF POLYMER SCIENCE: POLYMER CHEMISTRY EDITION, Bd. 22, NEW YORK, U.S., Seiten 295-301, JASUN LEE ET AL. 'POLYAROMATIC ETHER-KETONE SULFONAMIDES PREPARED FROM POLYDIPHENYL ETHER-KETONES BY CHLOROSULFONATION AND TREATMENT WITH SECONDARY AMINES'**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 574 791 B1

## Beschreibung

Die Erfindung betrifft Polymerelektrolyt-Membrane auf Basis eines sulfonierten aromatischen Polyetherketons.

Kationenaustauschermembranen werden u. a. in elektrochemischen Zellen eingesetzt, die anstelle eines Flüssigelektrolyten mit einem polymeren Festelektrolyten als Ionenleiter arbeiten. Beispiele hierfür sind Wasserelektrolyseure und Wasserstoff-/Sauerstoff-Brennstoffzellen. Membranen für diesen Einsatzzweck müssen erheblichen Anforderungen bezüglich chemischer, elektrochemischer, mechanischer Stabilität und Protonenleitfähigkeit genügen. Aus diesem Grunde wurden bisher nur fluorierte Membranen, die vornehmlich sulfonsaure Austauscherfunktionen erhalten, erfolgreich im Dauerbetrieb eingesetzt, beispielsweise in der Chlor-Alkali-Elektrolyse.

Obwohl die Verwendung fluorierter Austauschermembranen Stand der Technik ist, weisen sie Nachteile für den Einsatz in Festelektrolytanwendungen auf. Neben einem hohen Kostenfaktor stehen solche Materialien mit oben geforderten Eigenschaften nur in Membranform mit definierten Kenngrößen (Dicke, Austauscherkapazität) zur Verfügung und sie sind weder thermoplastisch noch als Lösung verarbeitbar. Gerade für Anwendungen als polymerer Festelektrolyt im Brennstoffzellen-/Elektrolysebetrieb werden jedoch Membranen mit einstellbaren Eigenschaften benötigt, die eine optimale Anpassung der Membraneigenschaften an die Anforderungen in der Zelle ermöglichen.

Zu den einstellbaren Eigenschaften gehört die Variation der Membrandicke, da insbesondere bei hohen Stromdichten, der der Membrandicke proportionale Widerstand erheblichen Anteil an den elektrischen Verlusten der Zelle hat. Kommerzielle, perfluorierte Membranen weisen typischerweise eine Dicke von 170 bis 180 μm auf, Dicken unterhalb von 0,1 mm sind wünschenswert. Polymere mit der Möglichkeit der thermoplastischen bzw. lösungsmäßigen Verarbeibarkeit bieten hier die Möglichkeit, Membranen in beliebiger Dicke bereitzustellen.

Zu den einstellbaren Eigenschaften gehört der Vernetzungsgrad der Membran. Der benötigte geringe Membranwiderstand bedingt eine hohe Ionenaustauschkapazität der Membran. Bei allen chemisch nicht vernetzten Membranen (hierzu gehören auch die kommerziellen perfluorierten Membranen) ist die Höhe der praktisch einsetzbaren Ionenaustauschkapazität jedoch limitiert, da die Membran mit zunehmendem Wert, insbesondere bei erhöhten Temperaturen, erheblich quillt und ihre mechanischen Eigenschaften nicht mehr ausreichend sind. Polymermaterialien, die nach ihrer Verarbeitung zur Membran jedoch grundsätzlich chemisch vernetzbar sind, bieten die Möglichkeit, die Quellung zu begrenzen.

Typischerweise für Kationenaustauschermembranen verwendete Polymere, wie z. B. sulfonierte Polystyrole, bieten zwar die Möglichkeit, aus flüssigen Monomeren hergestellt und in Membranform beliebiger Dicke nach Zugabe von Vernetzermolekülen polymerisiert werden zu können; sie weisen aber infolge der Wasserstoffatome an der aliphatischen Hauptkette nicht die erforderliche chemische Langzeitstabilität auf.

Weitere Eigenschaften, die eine gute Kationenaustauschermembran auszeichen, sind eine Unempfindlichkeit bei Betriebsunterbrechungen, die Beständigkeit gegen die Delaminieren einer Trägerfolie und (bei der Alkalichlorid-Elektrolyse) Unempfindlichkeit gegen Soleverunreinigungen.

Es bestand deshalb die Aufgabe, ionenleitfähige Membranen bereit zu stellen, die sich für den Einsatz als Polymere Festelektrolyten eignen, ausreichende chemische Stabilität aufweisen und aus Polymeren hergestellt werden können, die sich in geeigneten Lösungsmitteln lösen. Vorzugsweise sollte die Möglichkeit bestehen, diese Membranen durch eine nachträgliche Behandlung beständiger zu machen.

Diese Aufgabe wird gelöst durch ein Verfahren zur Herstellung einer Polymerelektrolyt-Membran aus sulfoniertem aromatischen Polyetherketon, bei dem man ein aromatisches Polyetherketon der allgemeinen Formel (I)

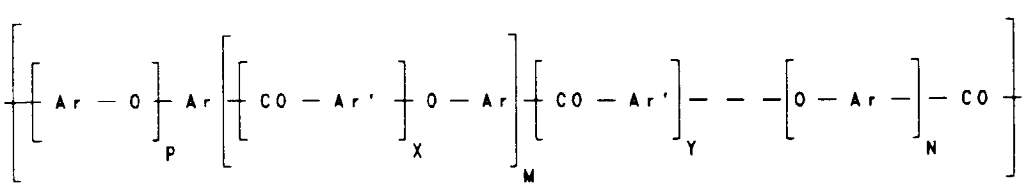

(I)

in der

| | |
|---|---|
| Ar | einen Phenylenring mit p- und/oder m-Bindungen, |
| Ar' | eine Phenylen-, Naphthylen-, Biphenylylen, Anthrylen- oder eine andere zweiwertige aromatische Einheit, |
| X, N und M | unabhängig voneinander 0 oder 1, |
| Y | 0, 1, 2 oder 3, |
| P | 1, 2, 3 oder 4 |

bedeuten,

sulfoniert, die Sulfonsäure isoliert, in einem organischen Lösungsmittel auflöst und die Lösung zu einer Folie verarbeitet. Dieses Verfahren ist dadurch gekennzeichnet, daß man in der Sulfonsäure mindestens 5 % der vorhandenen Sulfonsäuregruppen in Sulfonylchlorid-Gruppen umwandelt, man die Sulfonylchlorid-Gruppen mit einem Amin umsetzt, das mindestens einen vernetzbaren Substituenten oder eine weitere funktionelle Gruppe aufweist, wobei 5 % bis 25 % der ursprünglich vorhandenen Sulfonsäuregruppen in Sulfonamid-Gruppen umgewandelt werden, man anschließend nicht reagierte Sulfonsäurechlorid-Gruppen hydrolisiert, man das resultierende aromatische Sulfonsäureamid isoliert und in einem organischen Lösemittel auflöst, man die Lösung zu einer Folie verarbeitet und dann die in der Folie vorhandenen vernetzbaren Substituenten vernetzt.

Asymmetrische Membranen, die sich von einem sulfonierten aromatischen Polyetherketon ableiten, sind Gegenstand von EP-A-182506. Die dort beschriebenen Membranen sind aber frei von vernetzbaren oder vernetzten Gruppen.

Vorzugsweise wird die Sulfonierung des Polyetherketons der allgemeinen Formel (I) so durchgeführt, daß man es in Schwefelsäure von 94 bis 97 Gew.-% löst, man die erhaltene Lösung mit einem sulfonierenden Agens versetzt, bis die Schwefelsäure-Konzentration 98 bis 99,5 Gew.-% beträgt und man den Reaktionsansatz aufarbeitet, sobald der gewünschte Sulfonierungsgrad erreicht ist. Günstig ist es, wenn man dabei unter Bedingungen arbeitet, bei denen eine Sulfonierung weitgehend unterdrückt wird bzw. es noch nicht zu einer Sulfonierung kommt.

Die in Formel (I) angegebenen aromatischen Polyetherketone sind leicht zugänglich. Sie lassen sich prinzipiell durch elektrophile Polykondensation nach Friedel-Crafts aufbauen, wobei ein aromatisches Bissäuredihalogenid mit einem aromatischen Ether umgesetzt wird.

Vorzugsweise werden bei den Polymeren der Formel I die Indizes so abgestimmt, daß $p = 2 - (1 - X) \cdot M$.

Das Polymere mit p = 1, X = 0, M = 1, Y = 0, N = 0, ist unter der Bezeichnung ®Victrex im Handel verfügbar. Polymere, in denen N = 1 oder Y = 3 oder p = 4 oder X = 1 beträgt, lassen sich vorzugsweise nach einem nucleophilen Verfahren herstellen.

Vorzugsweise bestehen sämtliche zweiwertigen aromatischen Reste -Ar- des zu sulfonierenden Polymers aus Phenylen, vorzugsweise aus 1,4-Phenylen. Als sulfonierendes Agens, das zur Erhöhung der Schwefelsäure-Konzentration und zur Sulfonierung dient, werden vorzugsweise rauchende Schwefelsäure, Chlorsulfonsäure und Schwefeltrioxid eingesetzt.

Vorzugsweise beträgt die Konzentration der zum Auflösen verwendeten Schwefelsäure 96 bis 96,5 %. Die Lösetemperatur ist abhängig von dem Zahlenverhältnis Ether-Brücken/Carbonyl-Brücken. Mit steigendem Anteil an Ethergruppen relativ zu den Carbonylgruppen nimmt die Reaktivität der Polyetherketon-Hauptkette für eine elektrophile Substitution (z.B. Sulfonierung) zu.

Die Anzahl der einführbaren Sulfonsäuregruppen ist von der Anzahl der über Sauerstoffe verbrückten aromatischer Ringe abhängig. Nur O-Phenyl-O-Einheiten werden unter den angegebenen Bedingungen sulfoniert, während O-Phenyl-CO-Gruppen unsulfoniert bleiben. Im allgemeinen liegt die Temperatur beim Auflösen des Polymers zwischen 10 und 60°C, insbesondere zwischen 20 und 60°C, vorzugsweise zwischen 30 und 50°C. Während dieses Lösungsprozesses ist eine Sulfonierung der Hauptkette weitgehend unterdrückt. Eigene NMR-Untersuchungen haben gezeigt, daß während der Sulfonierung kein Abbau eintritt.

Nach vollständigem Lösen der Probe wird die Konzentration der Schwefelsäure, z.B. durch Zugabe von Oleum erhöht, bis die $H_2SO_4$-Konzentration 98 bis 99,9, insbesondere 98 bis 99,5, vorzugsweise 98,2 bis 99,5 Gew.-% beträgt. Die Reaktionstemperatur bei der eigentlichen Sulfonierung kann höher liegen als beim Löseprozeß. Im allgemeinen sulfoniert man bei 10 bis 100°C, insbesondere 30 bis 90°C, vorzugsweise bei 30 bis 80°C. Sowohl eine Temperaturerhöhung wie auch eine Verlängerung der Reaktionszeit bewirken eine Erhöhung des Sulfonierungsgrads des Polymers. Typische Reaktionszeiten liegen zwischen 0,5 und 10 Stunden, insbesondere zwischen 1 bis 8 Stunden, vorzugsweise zwischen 1,5 bis 3 Stunden. Reaktionszeiten über 10 Stunden erhöhen den Sulfonierungsgrad nur noch unwesentlich. Eine Erhöhung der Temperatur der Lösung auf mindestens 50°C nach Zugabe des sulfonierenden Agens beschleunigt die Sulfonierung erheblich.

Bevorzugt werden Homopolymere der allgemeinen Formeln IV oder V oder VI sulfoniert. Nach einer weiteren Ausgestaltung der Erfindung wird das beschriebene Verfahren eingesetzt zur Sulfonierung eines aromatischen Polyetherketons, das ein Copolymer darstellt, und aus mindestens 2 unterschiedlichen Einheiten der allgemeinen Formeln IV, V und VI

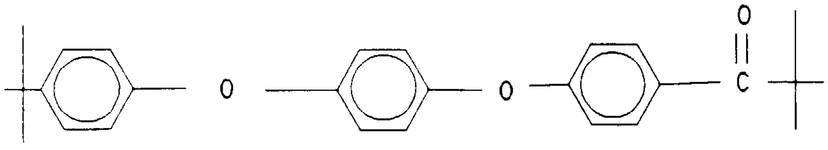

( I V )

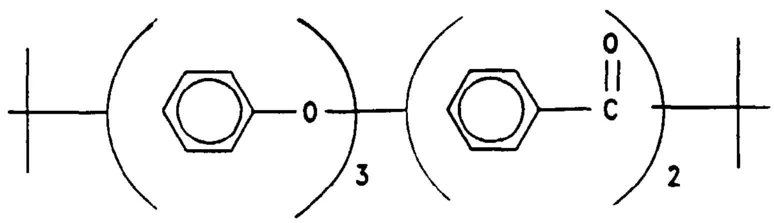

(V)

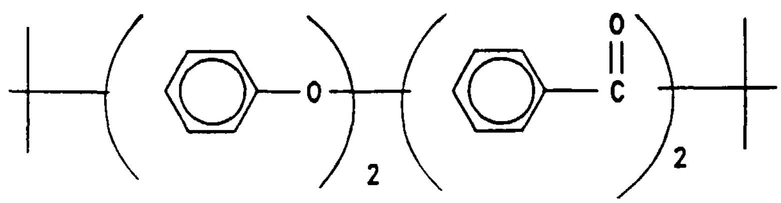

(VI)

aufgebaut ist.

Eine weitere vorzugsweise Ausgestaltung des erfindungsgemäßen Verfahrens besteht darin, daß man ein Polyetherketon einsetzt, das aus Einheiten der allgemeinen Formel V oder VI und zusätzlich aus nicht sulfonierbaren Einheiten aufgebaut ist. Die Sulfonierung von Copolymeren aus Monomer-Einheiten der allgemeinen Formel IV und nichtsulfonierbaren Etherketon-Einheiten wird in EP-A-41780 und EP 08895 beschrieben. Bei der vollständigen Sulfonierung eines Homopolymeren der allgemeinen Formel IV würde unter den gleichen Bedingungen ein vollkommen wasserlösliches Produkt mit sehr starker Quellbarkeit in Wasser bei Raumtemperatur erhalten werden, dessen Isolierung sehr schwierig ist. Diese Eigenschaften sind z. B. für eine Anwendung der Polysulfonsäuren als hydrophile Ionenaustauschermembrane in Elektrolysezellen unerwünscht, da eine starke Quellung zum Verlust der mechanischen Beständigkeit der Membran führt. Andererseits ist aber gerade für eine hohe Ionenaustauscherkapazität ein hoher Sulfonierungsgrad erforderlich.

Auch bei diesem Verfahren wird das Polyetherketon in Schwefelsäure von 94 bis 97 Gew.-% gelöst. Die erhaltene Lösung wird mit einem sulfonierenden Agens versetzt bis die Schwefelsäurekonzentration 98 bis 99,5 Gew.-% beträgt. Der Reaktionsansatz wird aufgearbeitet, sobald der gewünschte Sulfonierungsgrad erreicht ist.

Die nicht sulfonierbaren Einheiten weisen vorzugsweise die Formel XIIIa auf

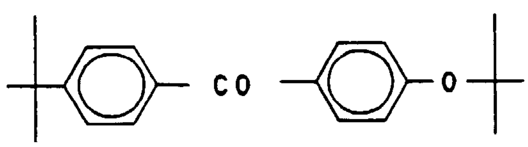

(XIIIa) (VII)

und leiten sich dann formal von 4-Oxy-Benzophenon ab oder besitzen die allgemeine Formel XIIIb

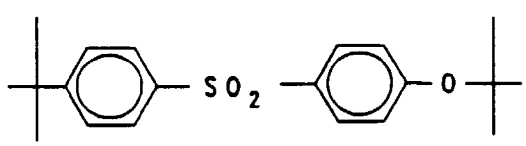

(XIIIb) (VIII)

und leiten sich dann von 4-Oxy-Benzosulfon ab.

Das Polymere der allgemeinen Formel IV wird in Schwefelsäure von 95 bis 96,5 Gew.-% bei maximal 25°C gelöst. Zum Lösen des Polymeren der allgemeinen Formel V in Schwefelsäure von 94 bis 96 Gew.-% arbeitet man vorzugsweise bei 30°C. Das Homopolymer der Formel VI wird vorzugsweise in Schwefelsäure von 95 bis 96,5 Gew.-% bei 25 bis 50°C gelöst und anschließend bei Temperaturen von 60 bis 90°C sulfoniert. Die Polymere der allgemeinen Formel I werden bei 25°C gelöst. Die eigentliche Sulfonierung findet dann bei mindestens 50°C und einer Säurekonzentration von mindestens 98,5 Gew.-% $H_2SO_4$ statt.

Die teilweise Umwandlung von Sulfonsäuregruppen in Sulfonylchlorid-Gruppen erfolgt nach bekannten Methoden. Beispielsweise kann man die isolierten Sulfonsäuren mit der berechneten Menge $PCl_5$ oder Thionylchlorid in einem inerten Lösungsmittel oder in überschüssigem Thionylchlorid umsetzten. Als Amine, die mit dem Sulfonyl-Gruppen reagieren und vernetzbare Substituenten einführen, eignen sich alle aliphatischen oder aromatischen Amine, die

den zweiwertigen, polymerisierbaren Rest -CH=CH- aufweisen, beispielsweise Allylamin, p-Amino-Zimtsäure und $C_1$-$C_4$-Alkylester der p-Amino-Zimtsäure. Falls die mit der $SO_2Cl$-Gruppe reagierenden Amine eine weitere (nicht vernetzbare) funktionelle Gruppe aufweisen, so soll diese in der Lage sein, sich an andere funktionelle Gruppen G zu addieren. Durch Umsetzung der gebildeten Sulfonamide mit einer Verbindung G-E-G, in der E ein Brückenglied bedeutet, lassen sich so zwei polymere Aryletherketonsulfonsäuren mittels funktioneller Gruppen verknüpfen. Als Beispiel für ein entsprechendes Amin mit einer funktionellen Gruppe sei das 2-Aminomethylfuran genannt, wobei das hieraus gewonnene N-Furylmethyl-sulfonamid mit einem substituierten Maleinsäureanhydrid in einer Diels-Alder-Reaktion unter Bildung von zwei nicht-aromatischen Sechsringen kondensiert. Falls die funktionelle Gruppe des Amins eine Amino- oder Alkoholfunktion darstellt, ist eine Dimerisierung mit Hilfe eines zweiwertigen Epoxyds möglich.

Die Umsetzung der Sulfonylchlorid-Gruppen mit dem Amin erfolgt vorzugsweise in einem inerten Lösungsmittel, z. B. in Chloroform oder Dichlorethan. Durch den Ersatz einer Sulfonsäure-Gruppe durch eine substituierte Sulfonamid-Gruppe steigt die Löslichkeit in organischen Lösungsmitteln, z. B. N-Methyl-pyrrolidon oder Dimethylsulfoxyd an. Das Auflösen von polymeren, aromatischen Aryletherketon-Sulfonsäuren (ohne weitere funktionelle Grupen) in organischen Lösemitteln, und die Weiterverarbeitung der Lösung zu einer Folie ist Stand der Technik. Entsprechende Lösungsmittel werden beispielsweise in der EP-A-0142973 angegeben.

Die Hydrolyse von nicht umgesetzten Sulfonylchlorid-Gruppen erfolgt durch wässrige Aufarbeitung.

Vorzugsweise hat die so hergestellte polymere Sulfonsäure die allgemeine Formel (VII)

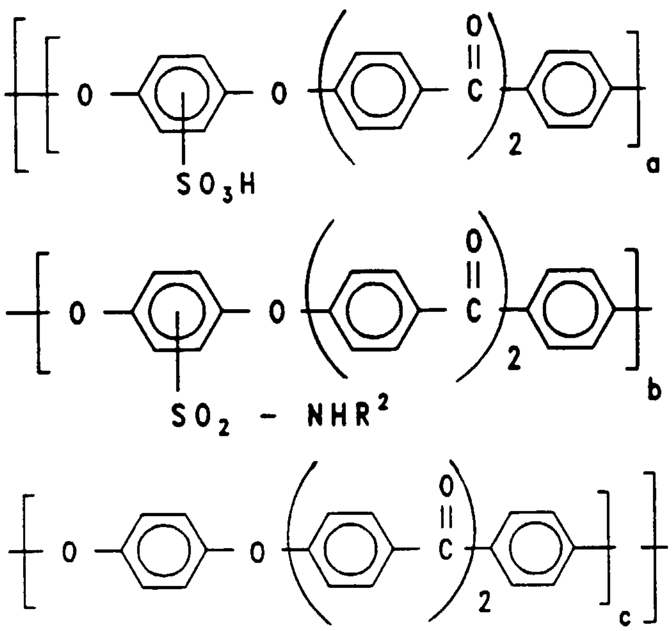

(VII)

wobei

- a eine Zahl von 0,15 bis 0,95,
- b eine Zahl von 0,05 bis 0,25,
- c eine Zahl von 0 bis 0,8,
- a+b eine Zahl von 0,2 bis 1,0 bedeutet und a+b+c = 1 und

$R^2$ ausgewählt ist aus den Resten

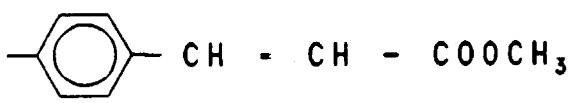

$$- CH_2 - CH = CH_2$$

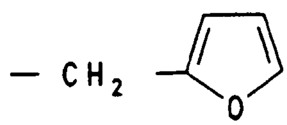

Nachdem die Polymerelektrolyt-Membran nach dem angegebenen erfindungsgemäßen Verfahren hergestellt wurde, werden die vernetzbaren Substituenten vorteilhafterweise durch energiereiche Strahlung oder Wärme vernetzt oder die mit dem Amin eingeführten funktionellen Gruppen durch Behandlung mit geeigneten Verbindungen einer Kondensation, insbesondere einer Cycloadditions-Reaktion unterworfen.

Durch die Vernetzung der Membran wird das Quellen in Wasser, insbesondere bei erhöhter Temperatur sehr stark vermindert. Dies ist günstig für den Einsatz der Membran in Brennstoff- oder Elektrolysezellen.

Für bestimmte Zwecke eignen sich auch bestimmte unvernetzte aromatische Polyetherketon-Sulfonsäuren als Material für Membranen. Beispielsweise werden in DE-OS 3402471 und DE-OS 3321860 Kationentauscher-Membranen beschrieben, die sich aus aromatischen Etheretherketonen der allgemeinen Formel (IV) durch Sulfonierung gewinnen lassen. Die Erfindung betrifft daher ferner ein Verfahren zur Herstellung einer Polymerelektrolyt-Membran auf Basis eines sulfonierten aromatischen Polyetherketons, das frei ist von vernetzten oder vernetzbaren Gruppen. Hierzu wird ein aromatisches Polyetherketon sulfoniert, die entstehende Sulfonsäure isoliert und in einem organischen Lösungsmittel, insbesondere einem aprotisch-polaren Lösungsmittel, aufgelöst und die Lösung zu einer Folie verarbeitet. Nach einer Ausgestaltung dieses Verfahrens besitzt die verwendete Sulfonsäure die allgemeine Formel (II)

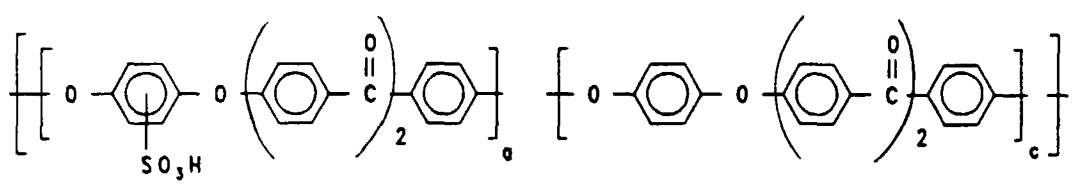 (II)

wobei a = 0,2 bis 1,0, c = 0 bis 0,8 und a + c = 1 ist.

Nach einer weiteren Ausgestaltung dieses Verfahrens besitzt die verwendete Sulfonsäure die allgemeine Formel (III)

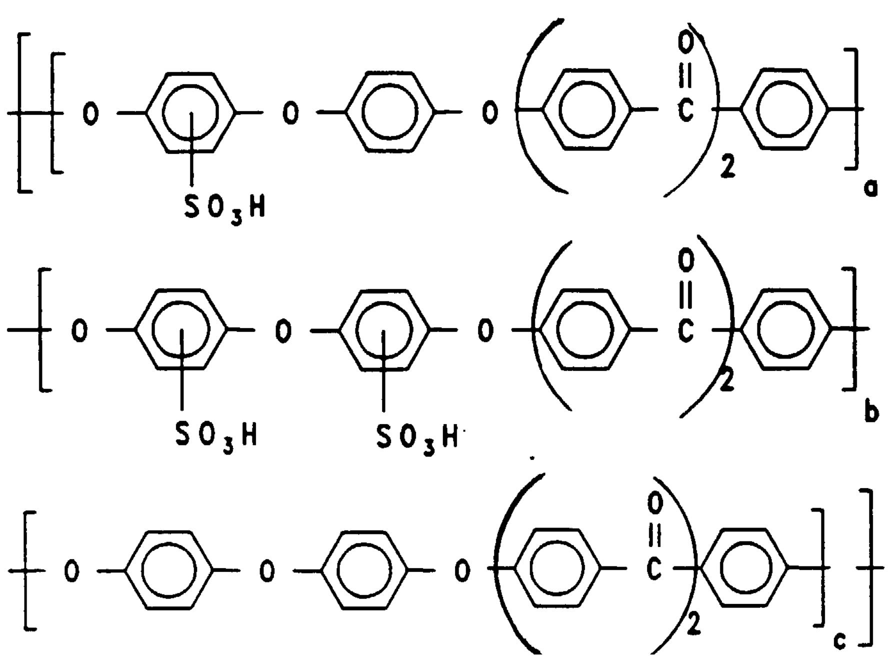 (III)

wobei

a = 0 bis 1,
b = 0 bis 1,
c = 0 bis 0,5 und
a + b + c = 1 beträgt.

Sie ist erhältlich durch Sulfonierung des Homopolymers der allgemeinen Formel V. Bei der Sulfonierung werden zuerst Monosubstitutionsprodukte (b = 0) erhalten, in denen a zwischen 0,5 und 1 und c zwischen 0 und 0,5 liegt. Dann erreicht a ein Maximum (etwa 1) wobei b gering bleibt und c auf geringe Werte zurückgeht. Schließlich kommt es zur Disulfonierung und der Wert von b steigt auf Kosten von a an.

Die beschriebenen Polyelektrolyt-Membranen weisen Sulfonsäuregruppen auf und leiten sich von aromatischen Aryletherketonen ab. Unabhängig davon, ob sie darüber hinaus vernetzte oder unvernetzte Sulfonamid-Gruppen enthalten, eignen sie sich als protonenleitende Festelektrolyt-Membranen in Brennstoffzellen oder Elektrolysezellen. Da die polymeren Sulfonsäuren zum Zeitpunkt ihrer Weiterverarbeitung unvernetzt sind, lassen sie sich in geeigneten, polaren Lösungsmitteln wie Dimethylformamid, NMP, DMAc, DMSO lösen. Die so erhaltene Lösung weist vorzugsweise eine Molarität zwischen 50 und 450 g/l auf. Sie wird auf ein Substrat gegossen und durch anschließendes Verdampfen des Lösungsmittels erhält man eine homogene Membran. Alternativ kann man die Lösung zur Einstellung einer definierten Membrandicke mittels einer Rakel definierter Naßfilmdicke über das Substrat verteilen und beispielsweise Dicken im Bereich von 0,05 bis 0,4 mm erzielen. Nach dem gleichen Prinzip werden Trägergewebe oder mikroporöse bis poröse Trägermembranen, z. B. aus Polyethylen, Polypropylen, Polytetrafluorethylen oder Glas, mit der oben aufgeführen Lösung in Kontakt gebracht und das Lösungsmittel anschließend verdampft. Allgemein weisen die eingesetzten polymeren Sulfonsäuren und Sulfonsäure-Derivate Molgewichte von mindestens 30000 auf.

Die so erhaltene Membran bildet einen Sonderfall einer Polyelektrolyt-Membran, deren Material aus einem aromatischen Polyetherketon der Formel (I) durch Sulfonierung gewonnen wird. Diese Membranen können für Brennstoffzellen und Elektrolysezellen als Feststoffelektrolyt eingesetzt werden. Falls man die Membran aus einer Lösung einer polymeren Sulfonsäure der allgemeinen Formel (VII) hergestellt hat, so liegt nach dem Vernetzen in der Polyelektrolyt-Membran ein sulfoniertes aromatisches Polyetherketon der allgemeinen Formel (VIII) vor

(VIII)

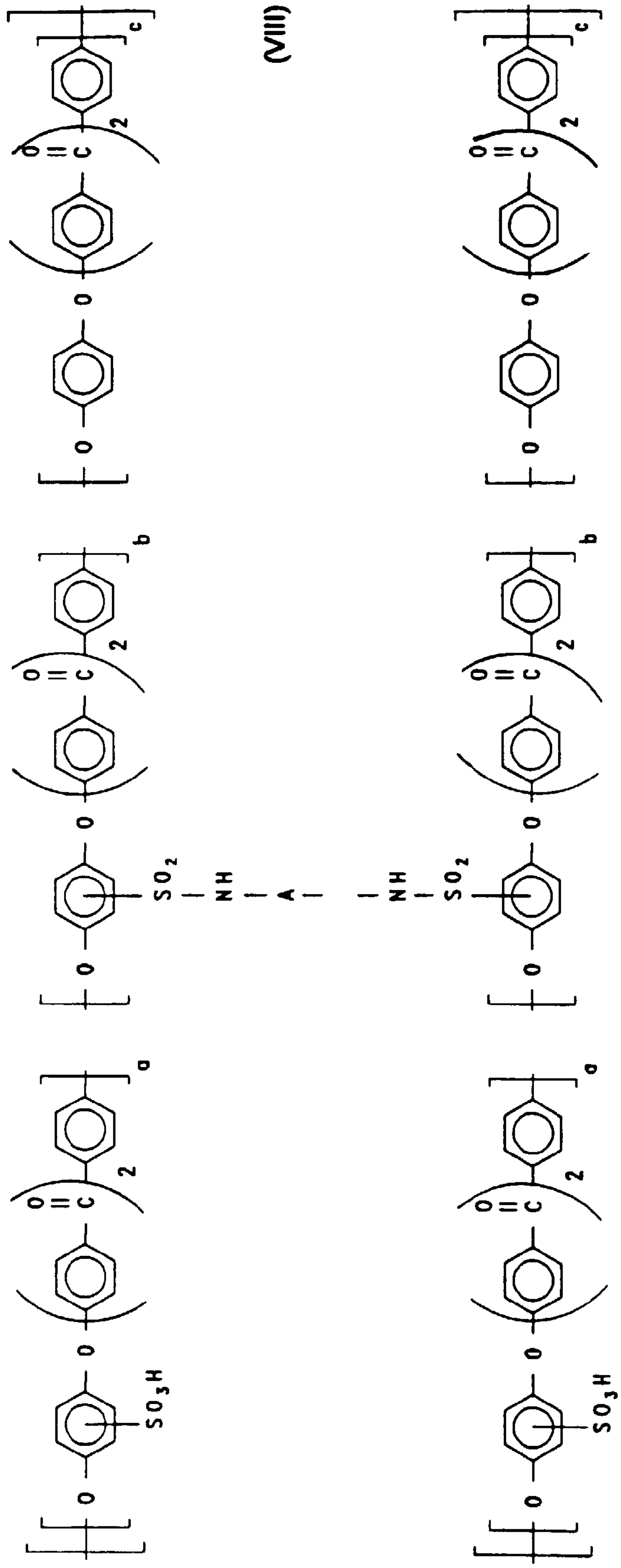

wobei

a eine Zahl von 0,15 bis 0,95,
b eine Zahl von 0,05 bis 0,25,
c eine Zahl von 0 bis 0,8,
a + b eine Zahl von 0,2 bis 1,0 bedeutet und
a + b + c = 1 ist und wobei A ein durch Cycloaddition entstandenes zweiwertiges Ringsystem darstellt. Sofern bei der Umsetzung der Sulfonsäurechlorid-Gruppen ein Para-Amino-Zimtsäureester eingesetzt wurde und die sich von diesem Ester ableitenden reaktiven Endgruppen durch Licht oder Wärme dimerisiert wurden, so bedeutet A einen Rest der allgemeinen Formel (IX)

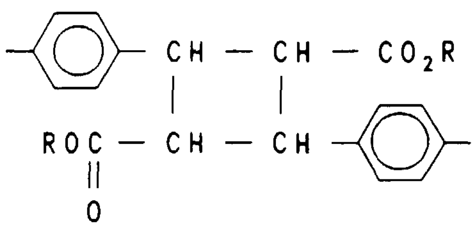

(IX)

in der R insbesondere für Wasserstoff oder Methyl steht. Falls die Sulfonylchlorid-Gruppen mit 2-Aminomethyl-furan umgesetzt wurden und die Verknüpfung der sich von diesem Amin ableitenden Reste mit einem Bis-Maleinimid durchgeführt wurde, hat der Rest A die allgemeine Formel (X)

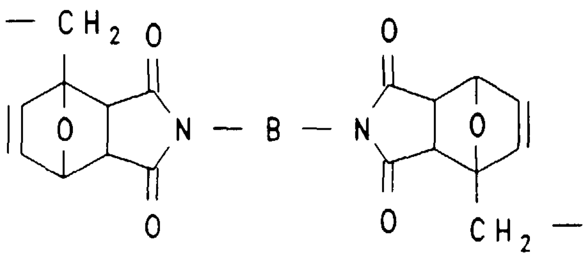

(X)

wobei B einen zweiwertigen Rest, z. B. eine Alkylenkette mit 1 bis 4 Kohlenstoff-Atomen, einen Phenylenrest, Diphenylether-Rest, 2,2-Bisphenylpropanrest oder 2,2-Bisphenoxyphenyl-propanrest bedeutet.

Man kann auch Gemische aus polymeren vernetzbaren Sulfonamiden und polymeren nicht vernetzbaren aromatischen Sulfonsäuren gemeinsam zu Membranen verarbeiten. Auch hier tritt der Vorteil auf, daß durch eine Vernetzung das Quellen in Wasser stark verringert wird. Beispielsweise kann man ein vernetzbares Sulfonsäure-Derivat der Formel (VII) vereinen mit einer Sulfonsäure, die bei der Sulfonierung der Verbindung der allgemeinen Formel (I) gewonnen wurde. Die erhaltene Mischung wird zu einer Membran verarbeitet und (VII) später vernetzt. Vorzugsweise hat die unvernetzbare Sulfonsäure die allgemeine Formel (II) und das vernetzbare Sulfonsäure-Derivat die allgemeine Formel (XII)

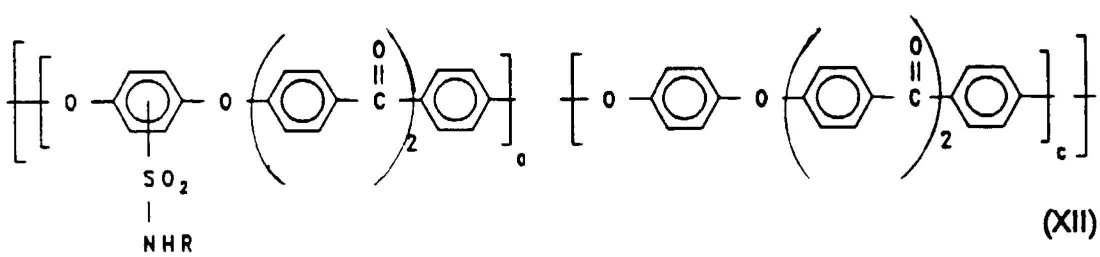

(XII)

wobei R für einen vernetzbaren Substituenten steht, beispielsweise $NH_2R$ Allylamin oder p-Amino-Zimtsäure bedeutet,

und a = 0 bis 1, c = 0 bis 0,5 und a+c = 1 ist.

Nach der Vernetzung durch (Licht, Wärme, Einfluß vernetzender Chemikalien) wird der Anteil an dem vernetzbaren Derivat der Formel XII umgewandelt in ein vernetztes Sulfonsäure-Derivat der Formel XI.

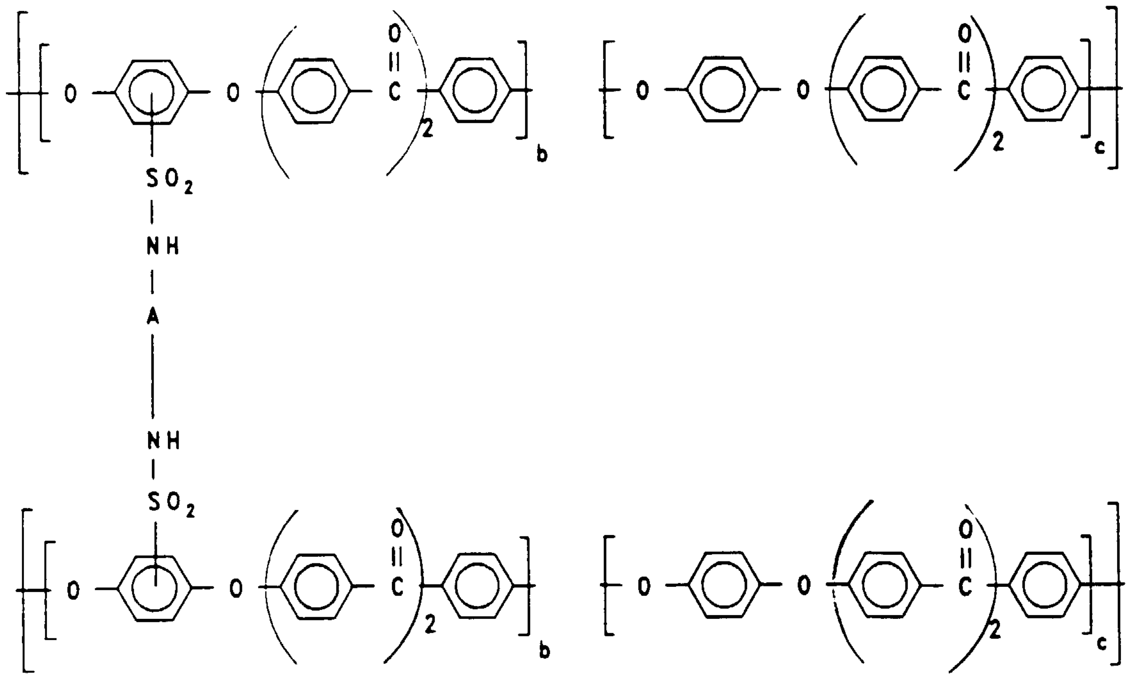

(XI)

in der b = 0,5 bis 1, c = 0 bis 0,5, b + c = 1 und A ein durch Cycloaddition entstandenes zweiwertiges Ringsystem darstellt.

In diesem Fall beträgt vorteilhafterweise der Anteil an (XII) 0,5 bis 25 Gew.-% und der Anteil an (II) 75 bis 99,5 Gew.-%.

Für den Einsatz der vernetzten Membran als Festelektrolyt in einer nach dem SPE - Verfahren arbeitenden Elektrolysezelle oder Brennstoffzelle, muß ein Katalysator auf die Membranoberfläche aufgebracht werden. Dieses Aufbringen kann man z. B. dadurch erreichen, daß man die Membran in einer Beschichtungszelle so einbaut, daß die Zelle durch die Membran in zwei Räume aufgeteilt wird. Wenn man auf der einen Seite das leicht reduzierbare Salz eines Katalysatormetalls, beispielsweise Hexachloroplatinsäure einbringt, in der anderen ein Reduktionsmittel einbringt, so diffundiert dieses durch die Membran und scheidet auf der Membranoberfläche das katalytisch wirksame Metall, beispielsweise Platin ab. Solche Verfahren wurden von H. Takinaka und E. Torikai in japanischen Patentanmeldungen angegeben (vgl. Chem. Abstracts 93(8) : 83677v und Chem. Abstracts 103(26) : 216571e).

Alternativ kann die Katalysatorbeschichtung durch Aufpressen eines Metallpulvers erfolgen. Beispielsweise kann man so eine Platinbelegung von 1 bis 20 mg/cm$^2$ erzielen. Der Pressdruck beträgt beispielsweise 1,1 bis 8,8 bar, die Pressdauer zwischen 5 bis 15 Minuten. Eine allgemeine Beschreibung des Pressverfahrens ist in Appleby, Yeager, Energy (Oxford) 11 (1988) p 132 enthalten.

Der Test der beschichteten Membranen erfolgt in Wasserelektrolyseuren bzw. Wasserstoff/Sauerstoff-Brennstoffzellen, die nach dem Festelektrolyt-Prinzip arbeiten. Die mit dem Katalysator beschichtete Membran separiert die beiden Halbzellen und ist gleichzeitig für den Ionentransport zuständig. Auf die Membran folgend enthält jede Halbzelle zudem eine metallische Gas- und Stromverteilerstruktur, einen metallischen Stromkollektor sowie im Falle der Wasserelektrolyse Wasserzufuhr-/Gasableitungssysteme und im Falle der Wasserstoff/Sauerstoff-Brennstoffzelle Gaszufuhr/Wasserableitungssysteme. Die Zellen sind im Bereich von 20 bis 80 °C temperierbar, die Membranen werden mit einer definierten Stromdichte im Bereich 0 bis 1 A/cm$^2$ Membranfläche belastet. In der Wasserelektrolysezelle ist die Bestimmung des Membranwiderstandes in der Zelle mittels des Verfahrens der Impedanzspektroskopie möglich. Der Quellungswert Q der Membran in Prozent ist definiert als:

$$Q = (\text{Naßgewicht} - \text{Trockengewicht}) * 100 / \text{Trockengewicht}$$

Die Erfindung wird durch die Beispiele näher erläutert.

Beispiel 1:

In einer Vierhals-Rührapparatur mit Tropftrichter und Ölbad wurde 96 %ige konz. Schwefelsäure vorgelegt und unterschiedliche aromatische Polyetherketone gelöst. Danach wurde die Säurekonzentration durch Titration mit Oleum (Gehalt 20 % $SO_3$) auf 98,5 bis 99,5 Gew.-% $H_2SO_4$ eingestellt. Die Sulfonierung wird durch eine sich anschließende Temperaturerhöhung beschleunigt. Die Endtemperatur hängt vom jeweiligen Polymer ab.
Die Versuche der Tabelle 1 wurden mit einem Homopolymer der allgemeinen Formel (IV) durchgeführt. Die Versuche der Tabelle 2 wurden mit einem Homopolymer der allgemeinen Formel (V) durchgeführt. Die Versuche der Tabelle 3 wurden mit einem Homopolymer der allgemeinen Formel (VI) durchgeführt. In den Tabellen wurden folgende Abkürzungen benutzt:

Legende:

| | |
|---|---|
| LT = | Lösetemperatur |
| RT = | Reaktionstemperatur |
| RZ = | Reaktionszeit |
| Ausb. = | Ausbeute |
| inh. V. = | inhärente Viskosität in conc. $H_2SO_4$ bei 25° C (0,1 %) gemessen |
| Sulfgrad = | Sulfonierungsgrad, bestimmt durch den Schwefelgehalt aus der Elementaranalyse (Anteil der sulfonierten O-Phenylen-O-Einheiten) |

Tabelle 1

| | LT (°C) | Säure Endkonz (%) | RT (°C) | RZ (h) | Ausb. (%) | inh. V. | Sulfgrad (%) |
|---|---|---|---|---|---|---|---|
| I | 25 | 98.50 | 25 | 1.00 | > 90 | - | 40 |
| II | 25 | 98.50 | 45-50 | 1.25 | > 90 | - | 63 |
| III | 25 | 98.50 | 45-50 | 1.50 | > 90 | 0.73 | 66 |
| IV | 40 | 98.50 | 60 | 3.00 | > 90 | 0.64 | 82 |
| V | 25 | 98.50 | 50 | 1.50 | > 90 | 0.71 | 77 |
| VI | 25 | 98.50 | 50 | 1.50 | > 90 | 0.71 | 76 |

Tabelle 2

| | LT (°C) | Säure Endkonz (%) | RT (°C) | RZ (h) | Ausb. (%) | inh. V. | Sulfgrad (%) |
|---|---|---|---|---|---|---|---|
| I | 30 | 98.50 | 30-35 | 1.25 | > 90 | 0.77 | 50 |
| II | 30 | 98.50 | 25-30 | 6.00 | > 90 | 0.74 | 60 |
| III | 30 | 98.50 | 50 | 1.00 | > 90 | 0.76 | 46 |
| IV | 30 | 98.20 | 50 | 4.00 | > 90 | 0.67 | 69 |

Tabelle 3

| | LT (°C) | Säure Endkonz (%) | RT (°C) | RZ (h) | Ausb. (%) | inh. V. | Sulfgrad (%) |
|---|---|---|---|---|---|---|---|
| I | 45 | 98.30 | 60 | 1.00 | > 90 | 0.80 | 21 |
| II | 45 | 98.30 | 70 | 0,50 | > 90 | 0.80 | 31 |
| III | 45 | 98.30 | 80 | 0.50 | > 90 | 0.71 | 52 |
| IV | 45 | 98.30 | 80 | 1.50 | > 90 | 0.67 | 72 |

Tabelle 3 (fortgesetzt)

| | LT (°C) | Säure Endkonz (%) | RT (°C) | RZ (h) | Ausb. (%) | inh. V. | Sulfgrad (%) |
|---|---|---|---|---|---|---|---|
| V | 45 | 98.50 | 60 | 4.00 | > 90 | 0.80 | 28 |
| VI | 45 | 98.10 | 80 | 4.00 | > 90 | 0.60 | 81 |
| VII | 45 | 98.95 | 60 | 4.00 | > 90 | 0.69 | 82 |
| VIII | 45 | 98.95 | 80 | 6.00 | > 90 | 0.57 | 75 |
| IX | 45 | 98.40 | 80 | 3.00 | > 90 | 0.70 | 91 |
| X | 45 | 99.10 | 60 | 1.00 | > 90 | 0.62 | 76 |
| XI | 45 | 98.95 | 60 | 0.83 | > 90 | 0.70 | 57 |

Beispiel 2: Sulfonierung eines Etherketons

230 ml Chlorsulfonsäure wurden in einem 1l-Dreihals-Rundkolben mit KPG-Rührer vorgelegt und unter Stickstoff mit Eis/Kochsalz auf -14 °C abgekühlt. Innerhalb von 10 min. wurden 25,0 g Polyetherketon zugegeben und mit 20 ml Chlorsulfonsäure nachgespült. Nach 1 h war das gesamte Polyetherketon gelöst und das Eisbad wurde entfernt. Das Reaktionsgemisch erwärmte sich auf 26 °C und wurde nun durch ein Wasserbad konstant bei 24 °C gehalten. Während der gesamten Reaktionszeit wurden in Zeitabständen jeweils 0,5 bis 0,8 ml entnommen und in ca. 15 ml Wasser gefällt. Die Flocken wurden abgesaugt, mit Wasser bis zur pH-Neutralität gewaschen, zweimal mit Ethanol nachgewaschen und bei 100 °C am Ölpumpenvakuum getrocknet. Anschließend wurden Schwefel-Elementaranalysen angefertigt.
Nach etwa 9 h Reaktionsdauer wurde der gesamte Kolbeninhalt mit Ausnahme von etwa 15 ml in 10 l gerührtes Eis/Wasser-Gemisch eingegossen. Das dabei ausgeflockte Produkt wurde abgesaugt und bis zur pH-Neutralität des Waschwassers mit Eis-Wasser gewaschen. Es wurde noch mit Ethanol und Ether nachgewaschen und bei ca. 80 °C im Vakuum getrocknet. Die 15 ml Reaktionslösung wurden nach ca. 29 h entsprechend aufgearbeitet. Die Abhängigkeit des Sulfonierungsgrades von der Reaktionsdauer ist in Tabelle 2 dargestellt. Der Sulfonierungsgrad wurde aus dem S/G-Verhältnis der Elementaranalyse berechnet.
Mit zunehmenden Sulfonierungsgrad steigt die Löslichkeit in heißem Dimethylformamid, Dimethylsulfoxid und N-Methylpyrrolidon an.

Tabelle 2:

| Sulfonierungsgrad der einzelnen Proben | | | |
|---|---|---|---|
| min. | Temp. (°C) | Sulfonierungsgrad (%) | Schwefel (%) |
| 30 | - 12 | 16,8 | 1,14 |
| 60 | - 8 | 19,7 | 1,34 |
| 85 | 13 | 39,9 | 2,71 |
| 110 | 22 | 61,4 | 4,17 |
| 135 | 26 | 74,5 | 5,06 |
| 175 | 24 | 85,9 | 5,83 |
| 200 | 24 | 86,3 | 5,86 |
| 225 | 24 | 87,2 | 5,92 |
| 250 | 24 | 88,8 | 6,03 |
| 280 | 24 | 86,9 | 5,90 |
| 305 | 24 | 87,6 | 5,95 |
| 335 | 24 | 89,0 | 6,04 |
| 375 | 24 | 87,2 | 5,92 |
| 405 | 24 | 89,4 | 6,07 |
| 435 | 24 | 88,5 | 6,01 |
| 470 | 24 | 88,7 | 6,02 |
| 500 | 24 | 89,1 | 6,06 |
| 530 | 24 | 90,0 | 6,11 |

Tabelle 2: (fortgesetzt)

| Sulfonierungsgrad der einzelnen Proben | | | |
|---|---|---|---|
| min. | Temp. (°C) | Sulfonierungsgrad (%) | Schwefel (%) |
| 560 | 24 | 89,5 | 6,08 |
| 1760 | | 94,6 | 6,42 |

Die Sulfonierung des Polyetherketons läßt sich auch anhand der $^{13}C$-NMR-Spektren verfolgen. Das Signal bei 142,0 ppm beweist eine Sulfonierung der Hydrochinon-Einheit. Das schwache Signal bei 119,0 ppm, rührt von unsubstituierten Hydrochinon-Einheiten. Zu dem gleichen Ergebnis führt auch das Signal bei 159,7 ppm, welches durch den Kohlenstoff erzeugt wird, der über eine Etherbindung mit der Hydrochinon-Einheit verbunden ist und para-ständig eine Keto-Funktion besitzt. Das entsprechende Kohlenstoffatom in Nachbarstellung zu einer sulfonierten Hydrochinon-Einheit weist Signale bei 161,5 bzw. 162,8 ppm auf.

Beispiel 3: Herstellung eines Sulfonsäurechlorids

12,5 g des sulfonierten Polyetherketons von Beispiel 2 werden in einem 2l-Dreihals-Rundkolben unter Rühren mit 250 ml Thionylchlorid und 30 Tropfen DMF versetzt. Dabei ist eine starke Gasentwicklung zu beobachten. Das Gemisch wird 2 h unter sanftem Rückfluß gekocht, nochmals mit 150 ml Thionylchlorid versetzt und weitere 14 h unter Rückfluß zum Sieden erhitzt.
Nach Zugabe von 400 ml Tetrachlorethan bis auf einen Rückstand von ca. 250 ml abdestiliert. Nach dem Abkühlen wird die Reaktionsmischung in 2,5 l Ether eingerührt. Die farblosen Flocken werden abgesaugt, mit Ether gewaschen und im Vakuum getrocknet.
Ausbeute: 12,4 g (95 %)

Beispiel 4: Umsetzung des Sulfonylchlorid-Polyetherketons mit primären oder sekundären Aminen (allgemeine Vorschrift)

1,60 g (32,6 mmol) des Sulfonylchlorid-Polyetherketons von Beispiel 3 werden unter Stickstoff in 25 ml Chloroform gelöst. Bei ca. 0 °C werden anschließend 25 bis 70 mmol des Amins zugetropft. Nach ca. 16 h Rühren bei Raumtemperatur wird das Reaktionsgemisch langsam in 750 ml Methanol eingegossen. Nach dem Absaugen wird das flockige Produkt mit 600 ml Ether behandelt. Das Produkt wird im Vakuum bei ca. 80 °C getrocknet.
Ausbeute: 56 bis 86 %

Beispiel 5: Herstellung einer Membran

Sulfoniertes Polyetherketon, das gemäß Beispiel 2 hergestellt wurde (Sulfonierungsgrad 90 %), wurde in DMF gelöst (Konzentration: 100 bis 300 g/l) und die Lösung mit einer 0,2 mm-Rakel über eine Glasplatte gezogen. Innerhalb von 15 Stunden war das DMF verdampft. Dann wurde die Glasplatte in Wasser gelegt. Die Polymerfolie löste sich vom Glas. Nach dem Äquilibrieren in wässriger KCl-Lösung betrug die Foliendicke über 27 µm.

Das Wasseraufnahmevermögen der Folie bei Raumtemperatur liegt unter 50 % und bei 80 °C bei ca. 1900 %. Die Membran bleibt dabei jedoch beständig. Die Permselektivität der Membran beträgt etwa 90 %. Die Membran ist auch nach einer Bestrahlung mit einer 700 W Quecksilber-Niederdruckdampflampe (30 min.) noch in Dimethylformamid löslich. Das Wasseraufnahmevermögen wird durch das Bestrahlen nicht verändert.

Beispiel 6: Herstellung einer Membran

Nach dem Verfahren von Beispiel 4 wurde ein Sulfonamid der Formel (XII) (a = etwa 0,95, c = etwa 0,05) hergestellt, in dem der Rest NHR sich von p-Amino-Zimtsäure-methylester ableitet. 20 g des Sulfonamids und 80 g der Sulfonsäure von Beispiel 2 wurden in 1 l DMF gelöst und aus der Lösung nach dem Verfahren von Beispiel 5 Folien bereitet. Nach dem Äquilibrieren in KCl-Lösung betrug die Foliendicke etwa 3 µm.

Durch zweistündiges Bestrahlen aus einem Abstand von ca. 5 cm mit einer 300 W-UV-Lampe fand eine teilweise [2 + 2]-Cycloaddition der Zimtsäure-Doppelbindung statt.
Während vor dem Bestrahlen das Wasseraufnahmevermögen der Folie (bei 85 °C) ca. 1800 % betrug, sank es nach der Bestrahlung auf 400 % ab. Die Permselektivität der Membran beträgt etwa 90 %.

Beispiel 7

Zur Herstellung der Kationenaustauschermembran werden 25 g sulfoniertes Polyetheretherketonketon mit einem Sulfonierungsgrad von 90 % in 100 ml Dimethylformamid gelöst. Die homogene Lösung wird auf eine Glasplatte gegossen und mit Hilfe einer Rakel der Naßfilmdicke 350 µm auf der Oberfläche verteilt. Nach 24-stündiger Trocknung bei Raumtemperatur läßt sich die Membran im Wasserbad ablösen. Die mittlere Dicke der bei Raumtemeratur in destilliertem Wasser äquilibrierten Membran betrug 65 µm.

Die Katalysatoraufbringung erfolgt im Heißpreßverfahren bei 130 °C, wobei sich eine Platinbelegung von 5 $mg/cm^2$ Membranfläche ergab. Diese Membran wurde in eine Wasserelektrolyse-Testzelle mit einer Membranfläche von 1 $cm^2$ eingebaut.

Bei den Messungen zeigte die Membran bis 80 °C stabiles Verhalten. Das Zellpotential lag bei einer Temperatur von 80 °C und einer Strombelastung von 1 $A/cm^2$ bei 2,15 Volt. Der Innenwiderstand im Elektrolysebetrieb bei 80 °C betrug 185 mOhm.

Während eines Dauertestes bei 80 °C unter einer Belastung von 1 $A/cm^2$ erwies sich die Membran über einen Zeitraum von 191 Stunden als stabil.

Beispiel 8

Eine gemäß Beispiel 7 hergestellte und beschichtete Membran wurde in eine Wasserstoff-/Sauerstoff-Brennstoffzelle mit einer Membranfläche von 12 $cm^2$ eingebaut. Die Membran erwies sich bis zu einer Temperatur von 80 °C als temperaturstabil. Im Betrieb mit einem Überdruck von jeweils 1 bar sowohl auf der Wasserstoff- wie auf der Sauerstoffseite stellte sich bei einer Belastung mit 175 $mA/cm^2$ eine Zellspannung von 700 mV ein.

## Patentansprüche

1. Verwendung einer Polymerelektrolyt-Membran deren Material aus einem aromatischen Polyetherketon der allgemeinen Formel (I) durch Sulfonierung gewonnen wird

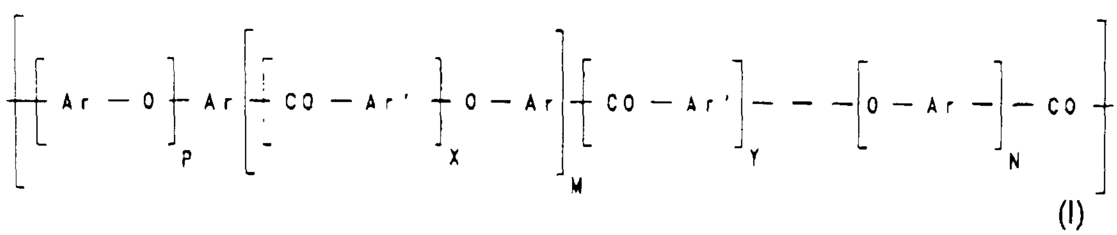

(I)

wobei

| | |
|---|---|
| Ar | einen Phenylenring mit p- und/oder m-Bindungen, |
| Ar' | einen Phenylen-, Naphthylen-, Biphenylen-, Anthrylen- oder eine andere zweiwertige aromatische Einheit, |
| X, N und M | unabhängig voneinander 0 oder 1, |
| Y | 0, 1, 2 oder 3 und |
| P | 1, 2, 3 oder 4 |

bedeuten,
wobei 5 bis 25% der ursprünglich vorhandenen Sulfonsäuregruppen in Sulfonamidgruppen umgewandelt und die vernetzbaren Substituenten vernetzt wurden, als protonen leitende Festelektrolyt-Membran in Brennstoffzellen oder Elektrolysezellen.

2. Verfahren zur Herstellung einer Polymerelektrolyt-Membran auf Basis eines sulfonierten aromatischen Polyetherketons, wobei man ein aromatisches Polyetherketon sulfoniert, man die entstehende Sulfonsäure isoliert und in einem organischen Lösungsmittel auflöst und die Lösung zu einer Folie verarbeitet, dadurch gekennzeichnet, daß die verwendete Sulfonsäure die allgemeine Formel (II)

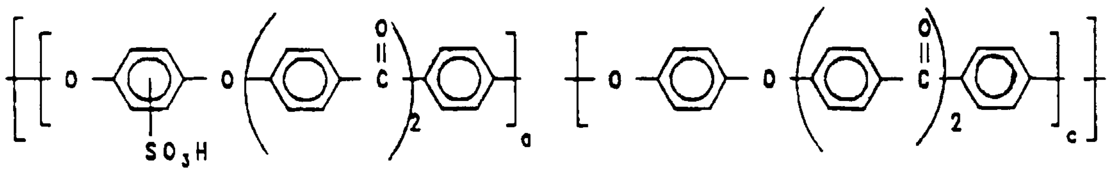

(II)

besitzt, wobei a = 0,2 bis 1,0, c = 0 bis 0,8 und a + c = 1 ist.

3. Verfahren zur Herstellung eine Polyelektrolyt-Membran auf Basis eines sulfonierten Polyetherketons, wobei man ein Polyetherketon sulfoniert, man die entstehende Sulfonsäure isoliert und in einem aprotisch-dipolaren organischen Lösungsmittel auflöst und die Lösung zu einer Folie verarbeitet, dadurch gekennzeichnet, daß die verwendete Sulfonsäure die allgemeine Formel (III)

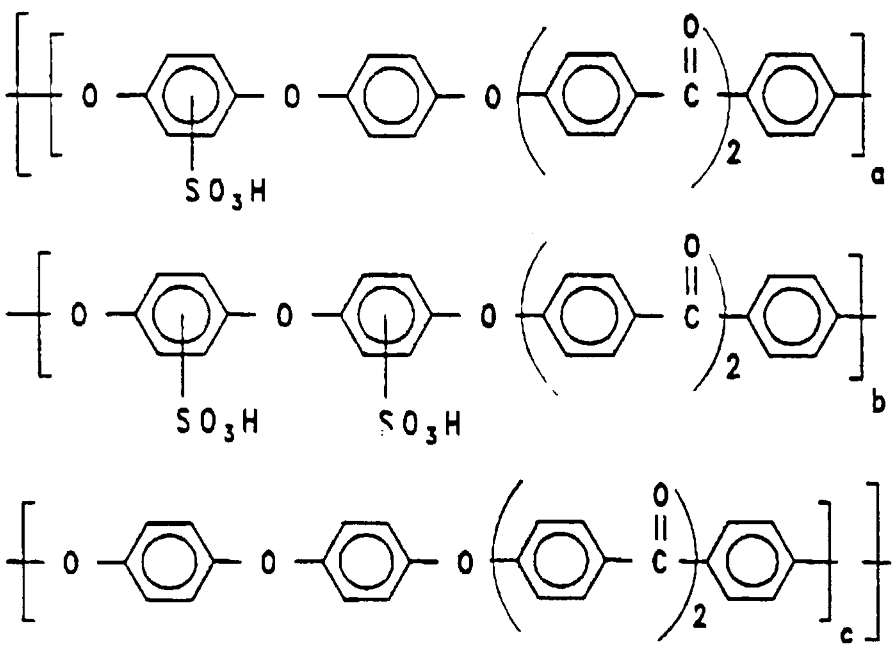

(III)

besitzt, wobei

a = 0 bis 1,
b = 0 bis 1,
c = 0 bis 0,5 und
a + b + c = 1 beträgt.

4. Verwendung gemäß Anspruch 1, dadurch gekennzeichnet, daß man das Polymere der allgemeinen Formel (IV)

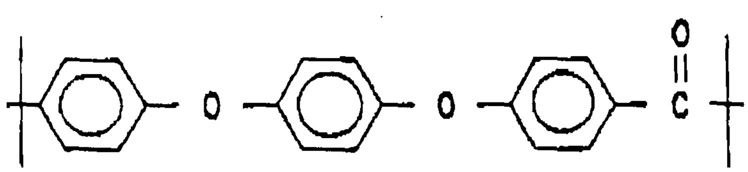

(IV)

mit einem Sulfonierungsgrad von 0,5 bis 1,0 verwendet.

5. Verwendung gemäß Anspruch 1, dadurch gekennzeichnet, daß man das Polymer der allgemeinen Formel (V),

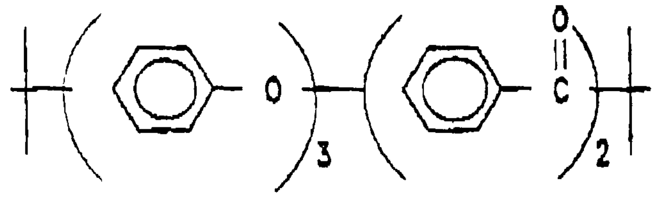

(V)

mit einem Sulfonierungsgrad von 0,5 bis 1,0 bezogen auf die sulfonierbaren O-Phenylen-O-Einheiten verwendet.

**6.** Verwendung gemäß Anspruch 1, daduroh gekennzeichnet, daß man das Polymer der allgemeinen Formel (VI)

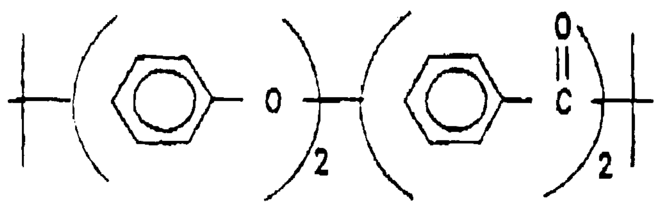

(VI)

mit einem Sulfonierungsgrad von 0,5 bis 1,0, vorzugsweise 0,6 bis 0,8, bezogen auf die sulfonierbare O-Phenylen-O-Einheit, verwendet.

**7.** Verwendung gemäß Anspruch 1, dadurch gekennzeichnet, daß man die Vernetzung durch energie reiche Strahlung oder Wärme herbeiführt.

**8.** Verwendung gemäß Anspruch 1, dadurch gekennzeichnet, daß das eingesetzte Amin eine einer Vernetzung zugängliche olefinische Doppelbindung aufweist.

**9.** Verwendung einer Polyelektrolyt-Membran, die aus einem aromatischen Polyetherketon der Formel (I)

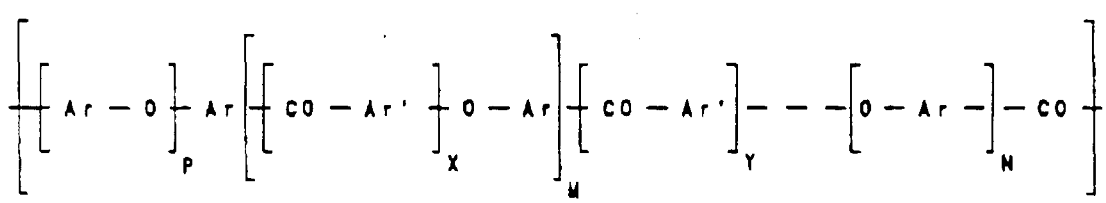

(I)

durch Sulfonierung gewonnen wird, wobei X, M, N, Y, P, Ar und Ar' die in Anspruch 1 angegebene Bedeutung besitzen und der Sulfonierungsgrad mindestens 0,5 Sulfonsäuregruppen pro wiederkehrende Einheit beträgt, als protonenleitende Festelektrolyt-Membran in Brennstoffzellen.

**10.** Polymere, vernetzbare Sulfonsäure der allgemeinen Formel (VII)

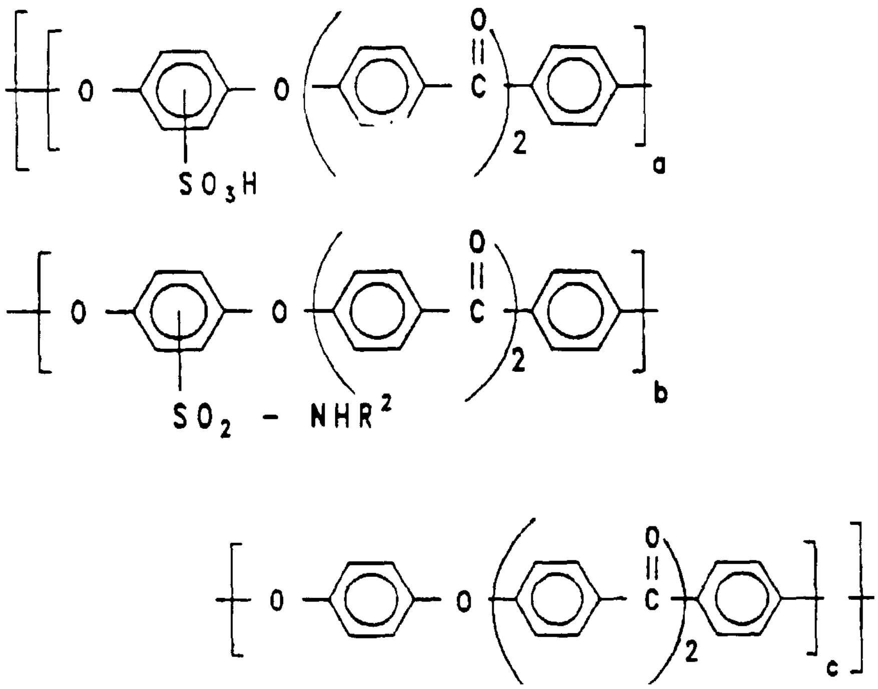

(VII)

wobei

a eine Zahl von 0,15 bis 0,95,
b eine Zahl von 0,05 bis 0,25,
c eine Zahl von 0 bis 0,8,
a+b eine Zahl von 0,2 bis 1,0 bedeutet und a+b+c = 1 und

$R^2$ ausgewählt ist aus den Resten

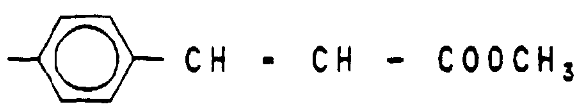

$- CH_2 - CH = CH_2$

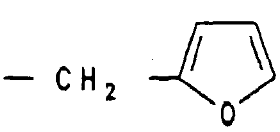

**11.** Polymerelektrolyt-Membran aus einem sulfonierten aromatischen Polyetherketon, dadurch gekennzeichnet, daß das sulfonierte aromatische Polyetherketon die allgemeine Formel (VII)

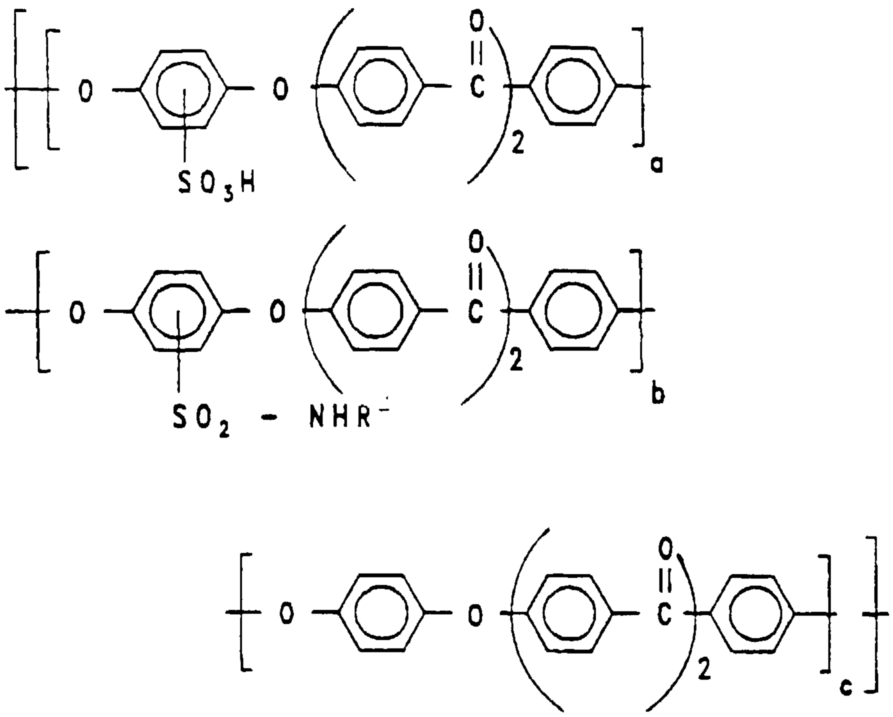

(VII)

aufweist,
wobei

| | |
|---|---|
| a | eine Zahl von 0,15 bis 0,95, |
| b | eine Zahl von 0,05 bis 0,25, |
| c | eine Zahl von 0 bis 0,8, |
| a+b | eine Zahl von 0,2 bis 1,0 bedeutet und a+b+c = 1 und |

$R^2$ ausgewählt ist aus den Resten

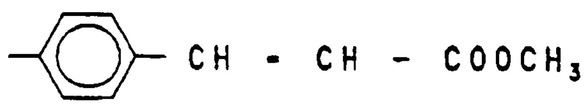

$- CH_2 - CH = CH_2$

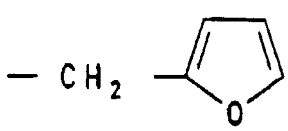

**12.** Polymerelektrolyt-Membran aus einem sulfonierten aromatischen Polyetherketon, dadurch gekennzeichnet, daß es die allgemeine Formel (VIII) besitzt,
wobei a, b, c die Anspruch 11 angegebene Bedeutung aufweisen und A ein durch Cycloaddition entstehendes zweiwertiges Ringsystem darstellt.

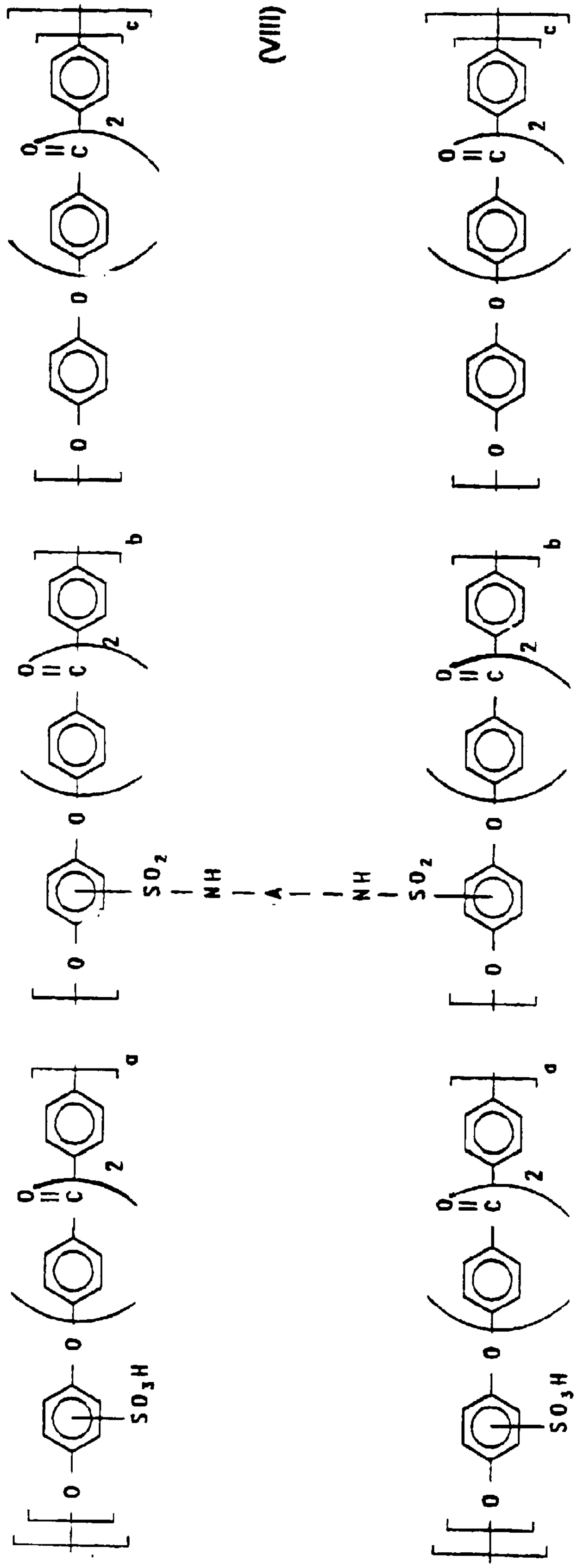

(VIII)

**13.** Polymerelektrolyt-Membran gemäß Anspruch 12, dadurch gekennzeichnet, daß A für den Rest der allgemeinen Formel (IX)

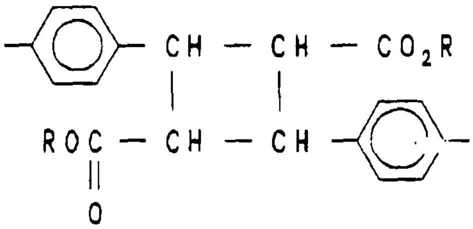

(IX)

steht, wobei R Wasserstoff oder Methyl bedeutet.

**14.** Polymerelektrolyt-Membran gemäß Anspruch 12, dadurch gekennzeichnet, daß A für den Rest der allgemeinen Formel (X)

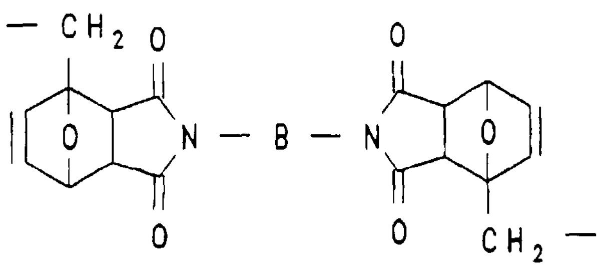

(X)

steht, wobei B einen zweiwertigen Rest bedeutet.

**15.** Polymerelektrolyt-Membran aus einem sulfonierten aromatischen Polyetherketon, dadurch gekennzeichnet, daß es

a) aus einem über Sulfonamidbrücken vernetzten Polymer der allgemeinen Formel (XI)

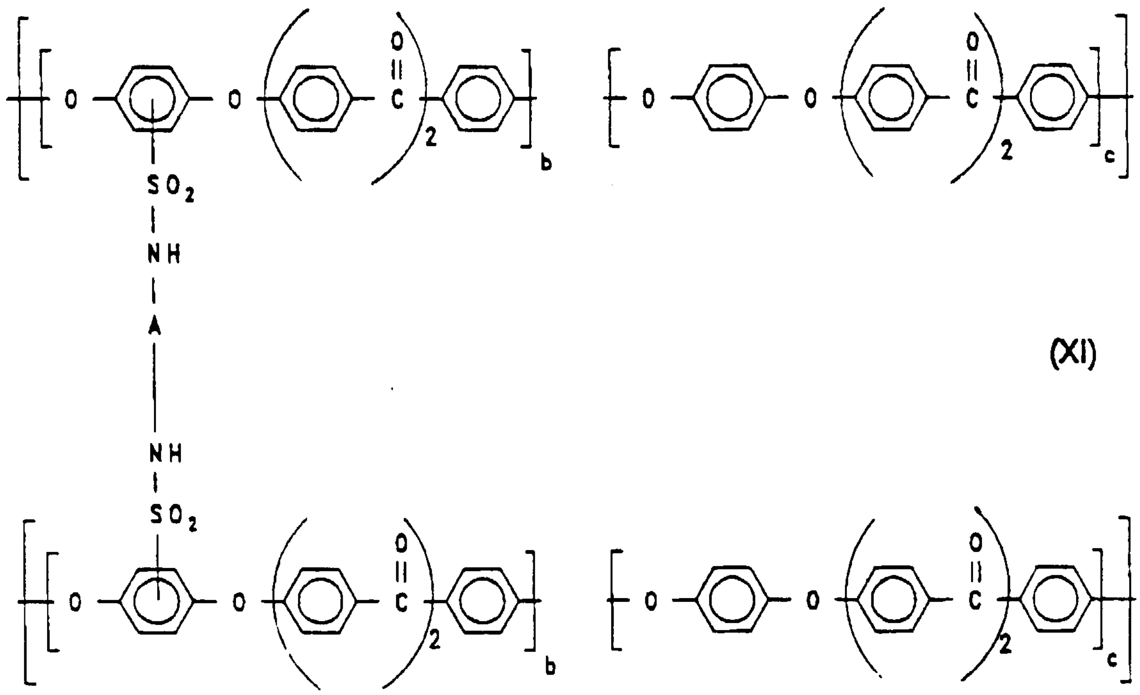

(XI)

in der b = 0,5 bis 1, c = 0 bis 0,5, b + c = 1 ist und A die in Anspruch 14 angegebene Bedeutung aufweist und b) einem sulfonierten Polyetherketon der allgemeinen Formel (I),

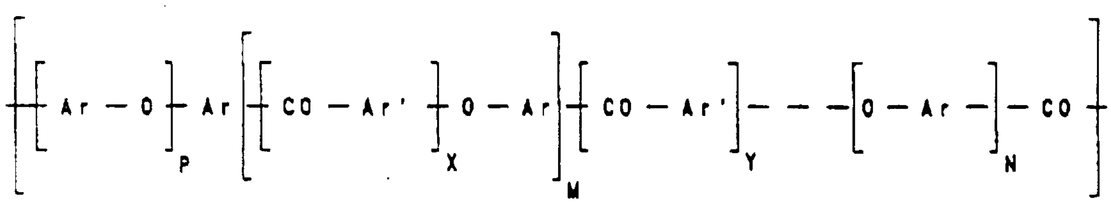

(I)

bei dem mindestens 20 % der O-Phenylen-O-Einheiten mit einer $SO_3H$-Gruppe substituiert sind, wobei Ar, Ar', X, N, M, Y und P die in Anspruch 1 angegebene Bedeutung aufweisen,

besteht.

**16.** Polymergemisch mit einem Gehalt an einem sulfonierten aromatischen Polyetherketon, dadurch gekennzeichnet, daß es aus der Sulfonsäure (11) und dem Sulfonamid (XII) besteht

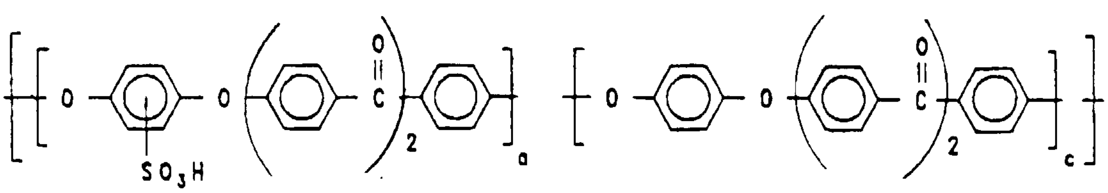

(II)

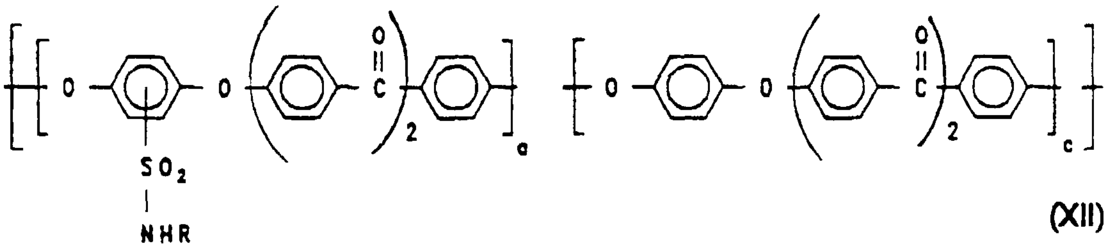

(XII)

wobei $NH_2R$ Allylamin oder p-Amino-Zimtsäure bedeutet und a = 0 bis 1, c = 0 bis 0,5 und a + c = 1 ist.

**17.** Polymergemisch gemäß Anspruch 16, dadurch gekennzeichnet, daß die Anteile an (XII) 0,5 bis 25 Gew.-% und an (11) 75 bis 99,5 Gew.-% betragen.

## Claims

**1.** The use of a polymer electrolyte membrane whose material is obtained from an aromatic polyether ketone of the formula (I) by sulfonation

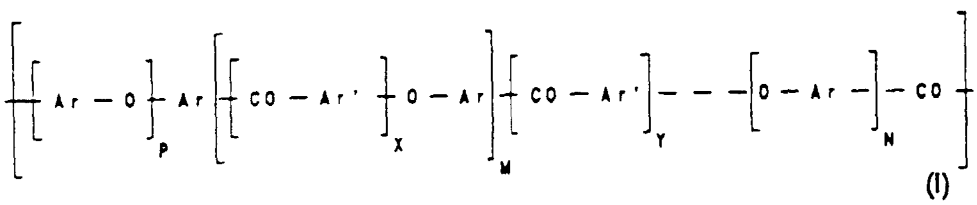

(I)

in which

| | |
|---|---|
| Ar | is a phenylene ring having p- and/or m-bonds, |
| Ar' | is a phenylene, naphthylene, biphenylene, anthrylene or another divalent aromatic unit, |
| X, N and M, | independently of one another, are 0 or 1, |
| Y | is 0, 1, 2 or 3, and |
| P | is 1, 2, 3 or 4, |

where from 5 to 25% of the original sulfonic groups have been converted into sulfonamide groups and the crosslinkable substituents have been crosslinked, as a proton-conducting solid electrolyte membrane in fuel cells or electrolysis cells.

**2.** A process for the production of a polymer electrolyte membrane based on a sulfonated, aromatic polyether ketone, in which an aromatic polyether ketone is sulfonated, the resultant sulfonic acid is isolated and dissolved in an organic solvent, and the solution is converted into a film, wherein the sulfonic acid used has the formula (II)

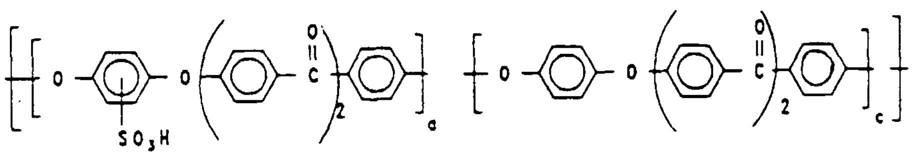

(II)

where a = 0.2 to 1.0, c = 0 to 0.8, and a + c = 1.

**3.** A process for the production of a polyelectrolyte membrane based on a sulfonated polyether ketone, in which a

polyether ketone is sulfonated, the resultant sulfonic acid is isolated and dissolved in an aprotic, dipolar organic solvent, and the solution is converted into a film, wherein the sulfonic acid used has the formula (III)

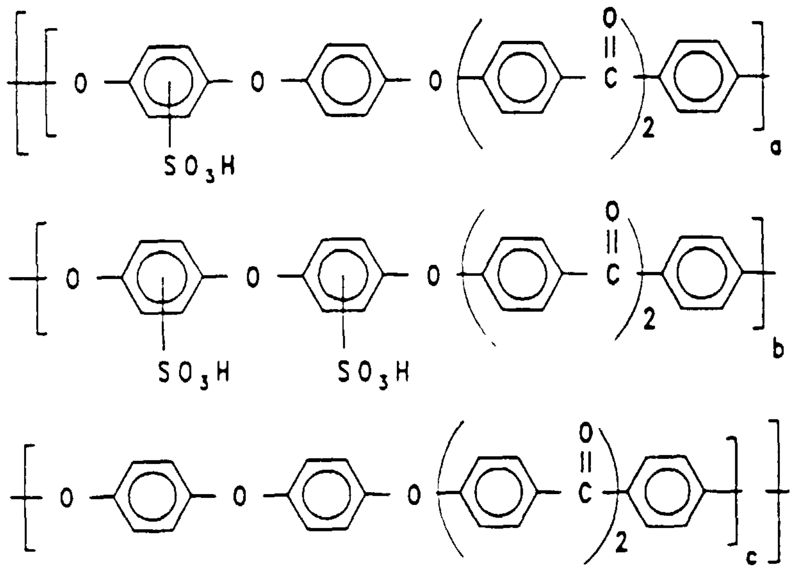

(III)

where

a = 0 to 1,
b = 0 to 1,
c = 0 to 0.5, and
a + b + c = 1.

**4.** The use as claimed in claim 1, wherein the polymer of the formula (IV)

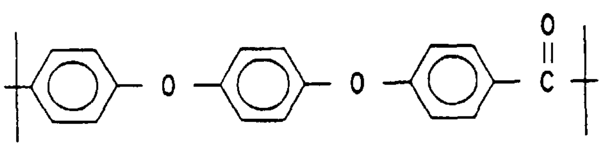

(IV)

having a degree of sulfonation of from 0.5 to 1.0 is used.

**5.** The use as claimed in claim 1, wherein the polymer of the formula (V)

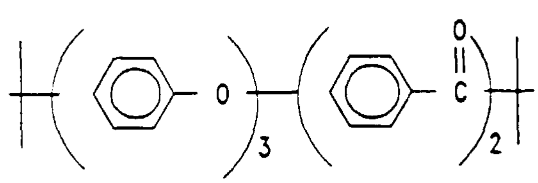

(V)

having a degree of sulfonation of from 0.5 to 1.0, based on the sulfonatable O-phenylene-O units, is used.

**6.** The use as claimed in claim 1, wherein the polymer of the formula (VI)

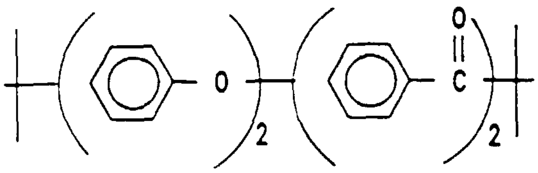

(VI)

having a degree of sulfonation of from 0.5 to 1.0, preferably from 0.6 to 0.8, based on the sulfonatable O-phenylene-O unit, is used.

**7.** The use as claimed in claim 1, wherein the crosslinking is effected by high-energy radiation or heat.

**8.** The use as claimed in claim 1, wherein the amine employed has an olefinic double bond which is susceptible to crosslinking.

**9.** The use of a polyelectrolyte membrane obtained from an aromatic polyether ketone of the formula (I)

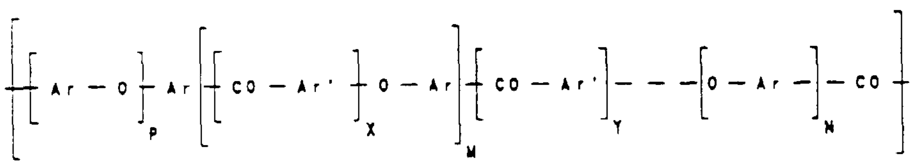

(I)

by sulfonation, where X, M, N, Y, P, Ar and Ar' are as defined in claim 1, and the degree of sulfonation is at least 0.5 sulfonic groups per recurring unit, as a proton-conducting solid electrolyte membrane in fuel cells.

**10.** A polymeric, crosslinkable sulfonic acid of the formula (VII)

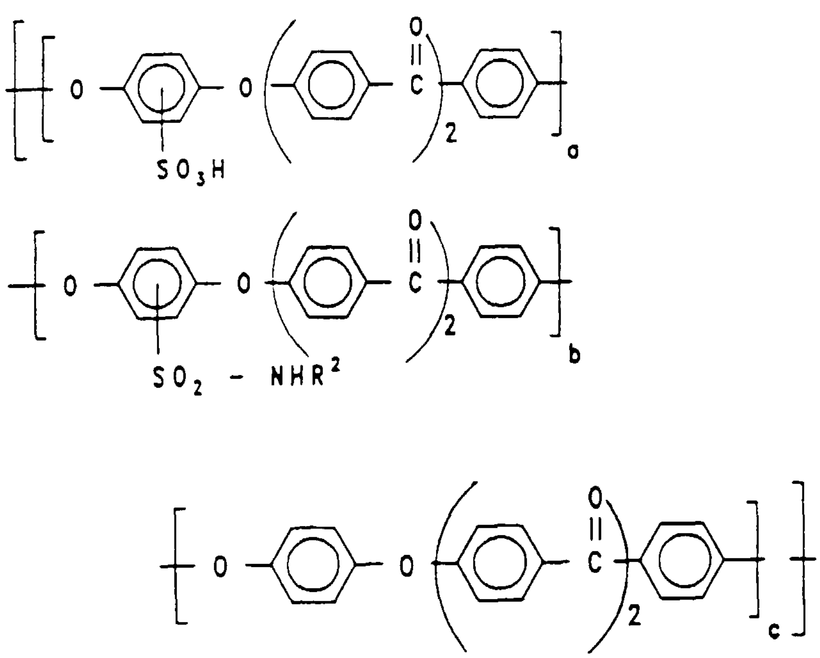

(VII)

where

a is a number from 0.15 to 0.95,

b is a number from 0.05 to 0.25,
c is a number from 0 to 0.8,
a + b is a number from 0.2 to 1.0, and a + b + c = 1, and

$R^2$ is selected from the radicals

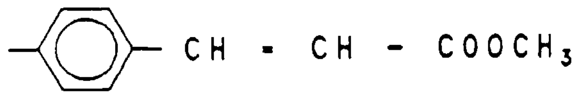

$-CH_2-CH=CH_2$

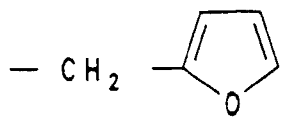

11. A polymer electrolyte membrane made from a sulfonated, aromatic polyether ketone, wherein the sulfonated, aromatic polyether ketone has the formula (VII)

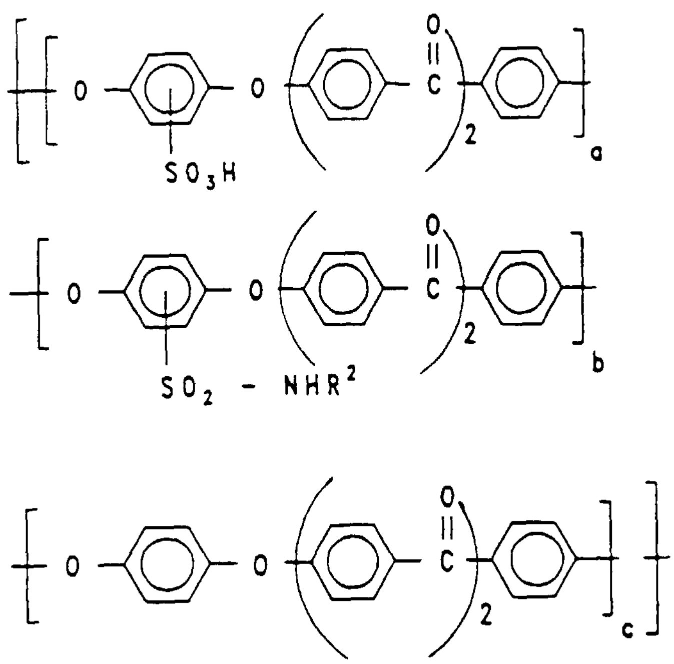

(VII)

where

a is a number from 0.15 to 0.95,
b is a number from 0.05 to 0.25,
c is a number from 0 to 0.8,
a + b is a number from 0.2 to 1.0, and a + b + c = 1, and

$R^2$ is selected from the radicals

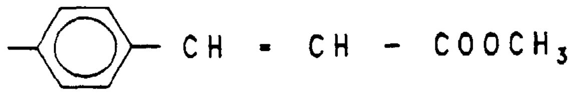

$-CH_2-CH=CH_2$

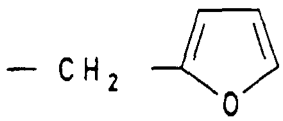

**12.** A polymer electrolyte membrane made from a sulfonated, aromatic polyether ketone, which has the formula (VIII) where a, b and c are as defined in claim 11, and A is a divalent ring system formed by cycloaddition.

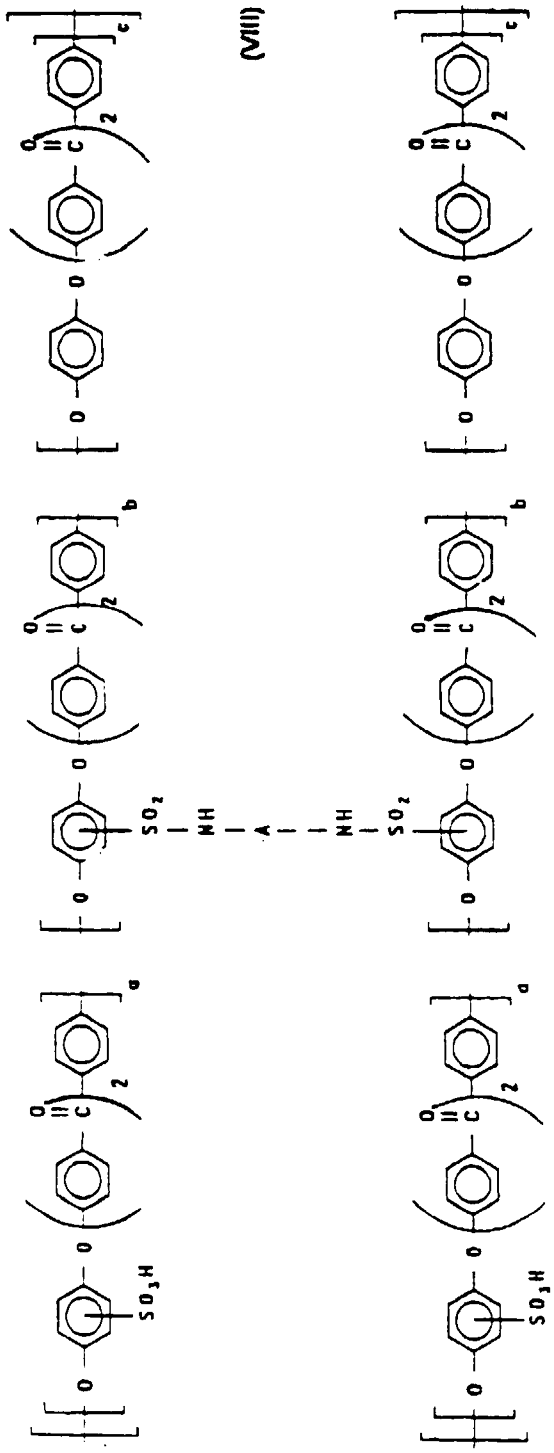

(VIII)

**13.** A polymer electrolyte membrane as claimed in claim 12, wherein A is the radical of the formula (IX)

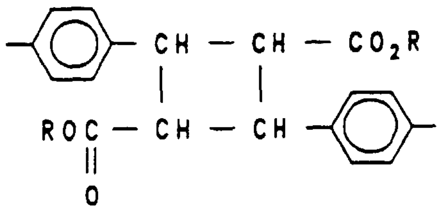

(IX)

where R is hydrogen or methyl.

**14.** A polymer electrolyte membrane as claimed in claim 12, wherein A is the radical of the formula (X)

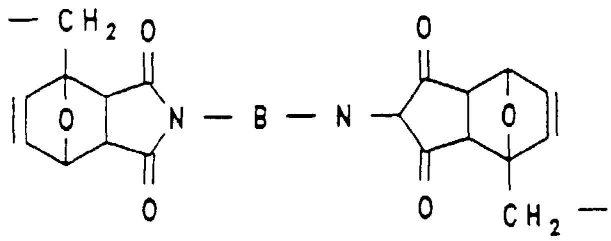

(X)

where B is a divalent radical.

**15.** A polymer electrolyte membrane made from a sulfonated, aromatic polyether ketone, which consists of

a) a polymer of the formula (XI)

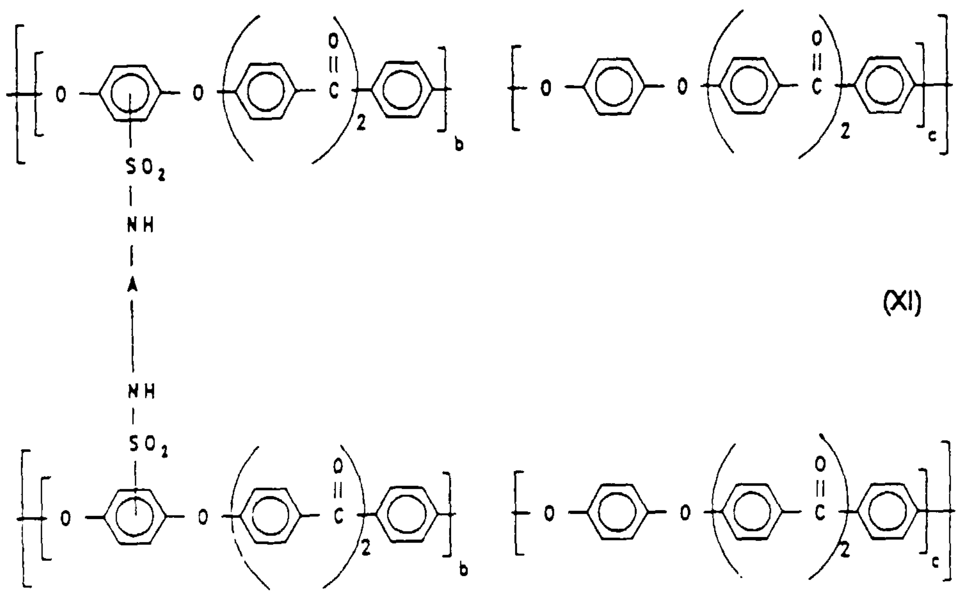

(XI)

in which b = 0.5 to 1, c = 0 to 0.5, b + c = 1, and A is as defined in claim 14, which is crosslinked via sulfonamide bridges and

b) a sulfonated polyether ketone of the formula (I),

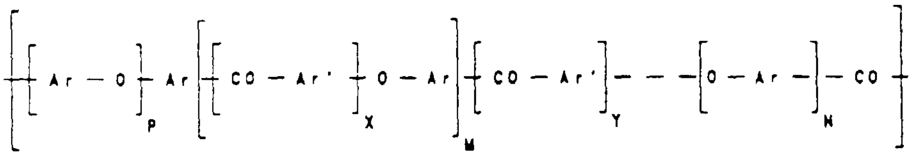 (I)

in which at least 20% of the O-phenylene-O units are substituted by an $SO_3H$ group, where Ar, Ar', X, N, M, Y and P are as defined in claim 1.

**16.** A polymer mixture containing a sulfonated, aromatic polyether ketone, which consists of the sulfonic acid (II) and the sulfonamide (XII)

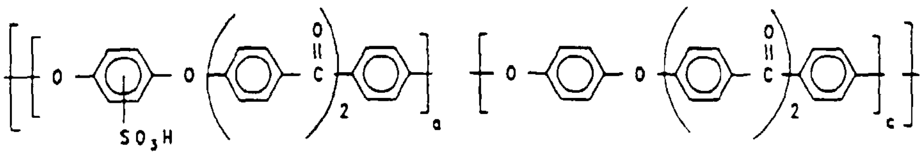 (II)

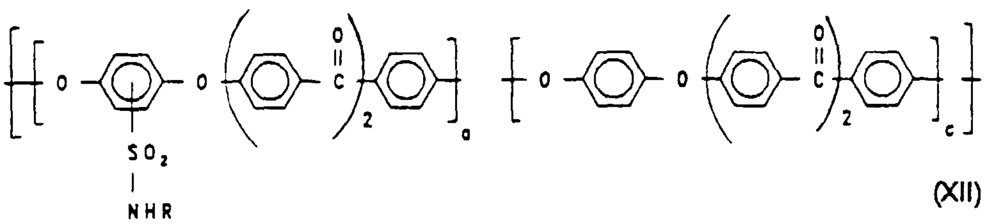

(XII)

where $NH_2R$ is allylamine or p-aminocinnamic acid and a = 0 to 1, c = 0 to 0.5 and a + c = 1.

**17.** A polymer mixture as claimed in claim 16, wherein the proportion of (XII) is from 0.5 to 25% by weight and the proportion of (II) is from 75 to 99.5% by weight.

## Revendications

**1.** Emploi d'une membrane de polyélectrolyte dont la matière est obtenue par sulfonation d'une polyéthercétone aromatique de formule générale (I)

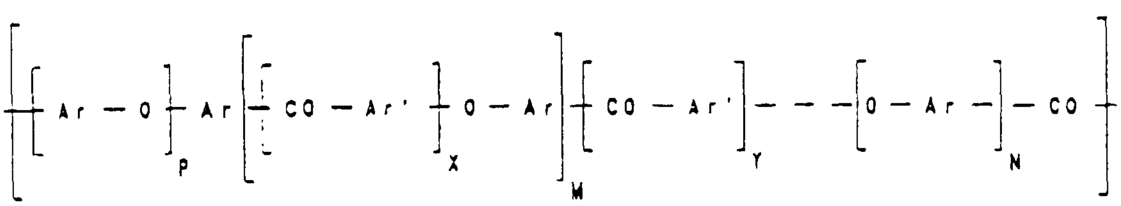

(I)

où

| | |
|---|---|
| Ar | représente un cycle phénylène avec des liaisons p et/ou m, |
| Ar' | représente un motif phénylène, naphtylène, biphénylylène, anthrylène ou un autre motif aromatique |

| | |
|---|---|
| | bifonctionnel, |
| X, N et M | valent, indépendamment l'un de l'autre, 0 ou 1, |
| Y | vaut 0, 1, 2 ou 3, |
| P | vaut 1, 2, 3 ou 4, |

5 à 25% des groupes acide sulfonique présents initialement étant transformés en groupes sulfonamido et les substituants réticulables étant réticulés, en tant que membrane d'électrolyte solide dans des piles à combustible ou cellules d'électrolyse.

**2.** Procédé pour la préparation d'une membrane d'électrolyte polymère à base d'une polyéthercétone aromatique sulfonée, par sulfonation d'une polyéthercétone aromatique, en isolant l'acide sulfonique obtenu et en dissolvant dans un solvant organique et en transformant la solution pour obtenir une feuille, caractérisé en ce que l'acide sulfonique employé présente la de formule générale (II)

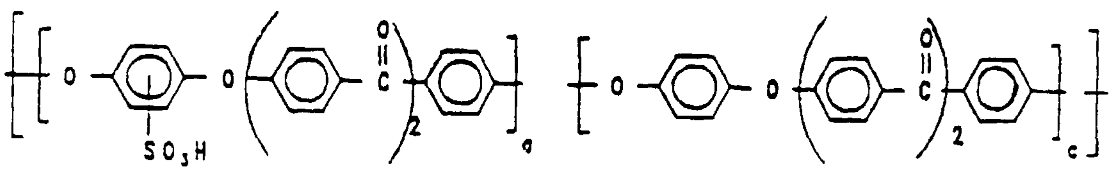

(II)

où à = 0,2 à 1,0, c = 0 à 0,8 et a + c = 1.

**3.** Procédé pour la préparation d'une membrane de polyélectrolyte à base d'une polyéthercétone sulfonée, en sulfonant une polyéthercétone, en isolant l'acide sulfonique formée et en dissolvant dans un solvant organique aprotique-dipolaire et en transformant la solution pour obtenir une feuille, caractérisé en ce que l'acide sulfonique employé répond à la formule générale (III)

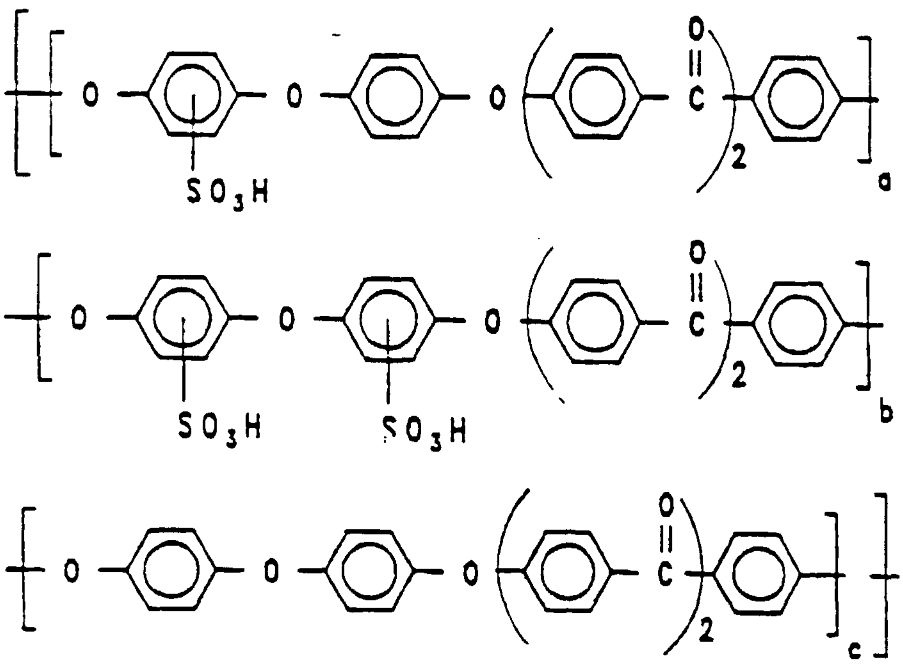

(III)

où

a = 0 à 1,
b = 0 à 1,
c = 0 à 0,5 et
a + b + c = 1.

4. Utilisation selon la revendication 1, caractérisée en ce que l'on emploie le polymère de formule générale (IV)

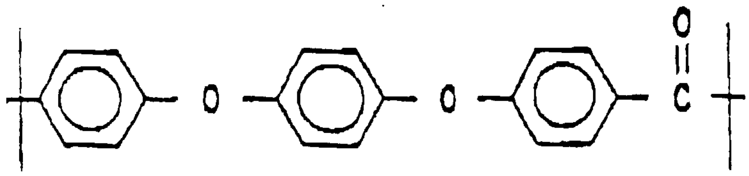

(IV)

ayant un degré de sulfonation de 0,5 à 1,0.

5. Utilisation selon la revendication 1, caractérisée en ce que l'on l'emploi le polymère de formule générale (V)

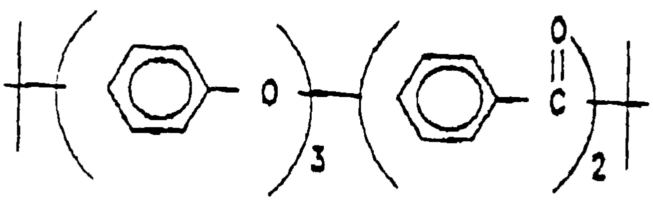

(V)

ayant un degré de sulfonation de 0,5 à 1,0 par rapport aux motifs O-phénylène-O sulfonables.

6. Utilisation selon la revendication 1, caractérisée en ce que l'on l'emploi le polymère de formule générale (V)

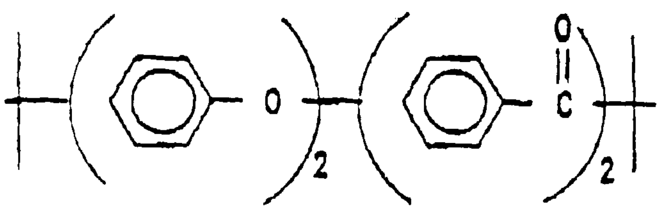

(VI)

ayant un degré de sulfonation de 0,5 à 1,0, de préférence de 0,6 à 0,8, par rapport aux motifs O-phénylène-O sulfonables.

7. Utilisation selon la revendication 1, caractérisée en ce que l'on réalise la réticulation à l'aide d'un rayonnement de haute énergie ou par la chaleur.

8. Utilisation selon la revendication 1, caractérisée en ce que l'amine employée présente une double liaison oléfinique, accessible à la réticulation.

9. Utilisation d'une membrane de polyélectrolyte obtenue à partir d'une polyéthercétone aromatique de formule (I)

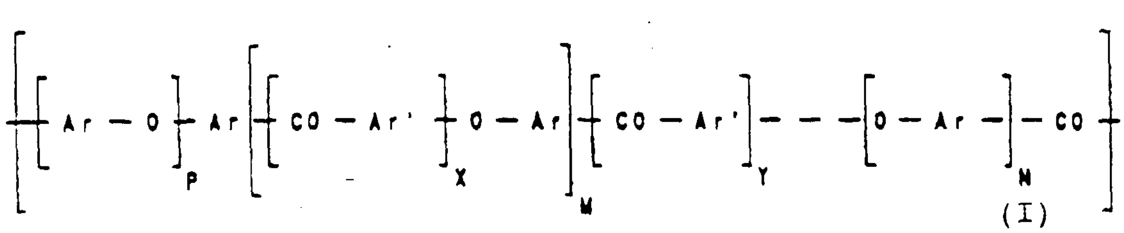

(I)

que l'on obtient par sulfonation, X, M, N, Y, P, Ar et Ar ' possèdent les significations données à la revendication 1 et le degré de sulfonation est d'au moins 0,5 groupe acide sulfonique par motif récurrent, en tant que membrane

d'électrolyte solide conductrice de protons, dans des piles à combustible.

**10.** Acide sulfonique polymère, réticulable, de formule générale (VII)

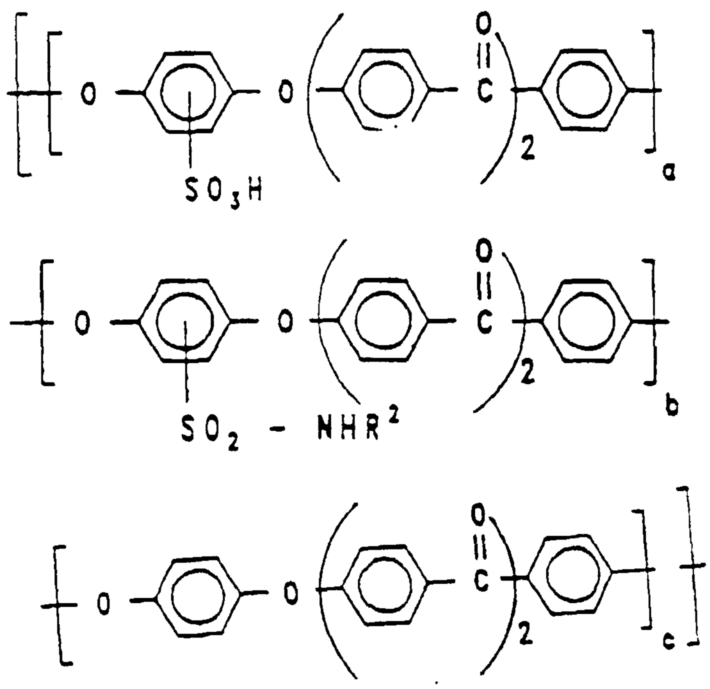

(VII)

où

a allant de 0,15 à 0,95,
b allant de 0,05 à 0,25,
c allant de 0 à 0,8,
a + b allant de 0,2 à 1,0 et
a + b + c = 1 et

$R_2$ est pris parmi les restes

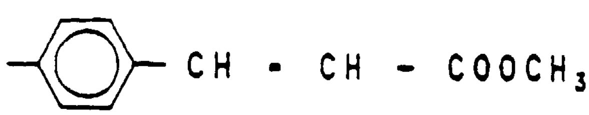

$- CH_2 - CH = CH_2$

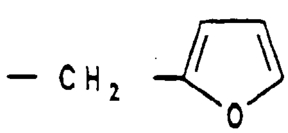

**11.** Membrane de polyélectrolyte en une polyéthercétone sulfonée aromatique, caractérisée en ce que la polyéthercétone présente la formule générale (VII)

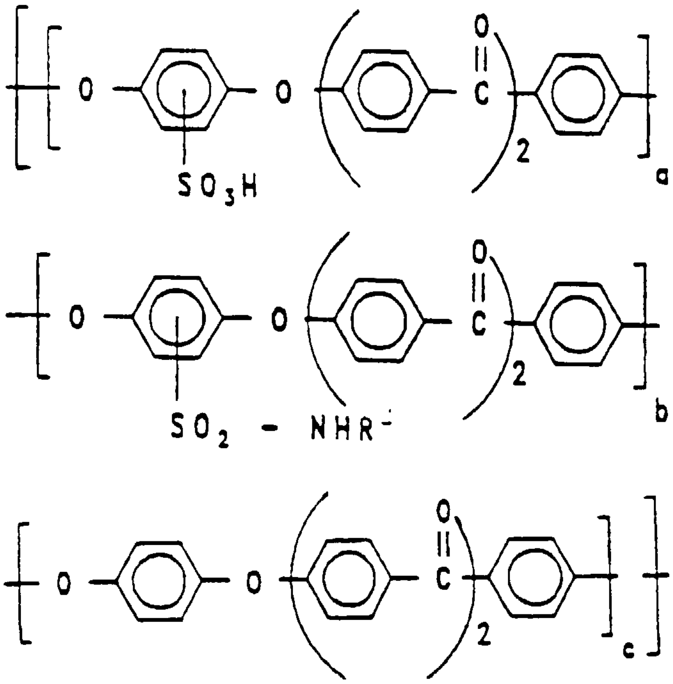

(VII)

où

a étant un nombre qui va de 0,15 à 0,95,
b étant un nombre qui va de 0,05 à 0,25,
c étant un nombre qui va de 0 à 0,8,
a + b étant un nombre qui va de 0,2 à 1,0 et a + b + c = 1 et

$R_2$ est pris parmi les restes

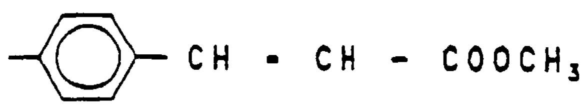

$- CH_2 - CH = CH_2$

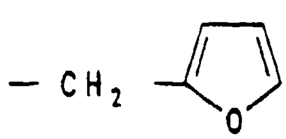

**12.** Membrane de polyélectrolyte à partir d'une polyéthercétone sulfonée aromatique, caractérisée en qu'elle répond à la formule générale (VIII),
a, b, c possédant les significations données à la revendication 11 et A représentant un système cyclique bifonctionnel formé par cycloaddition.

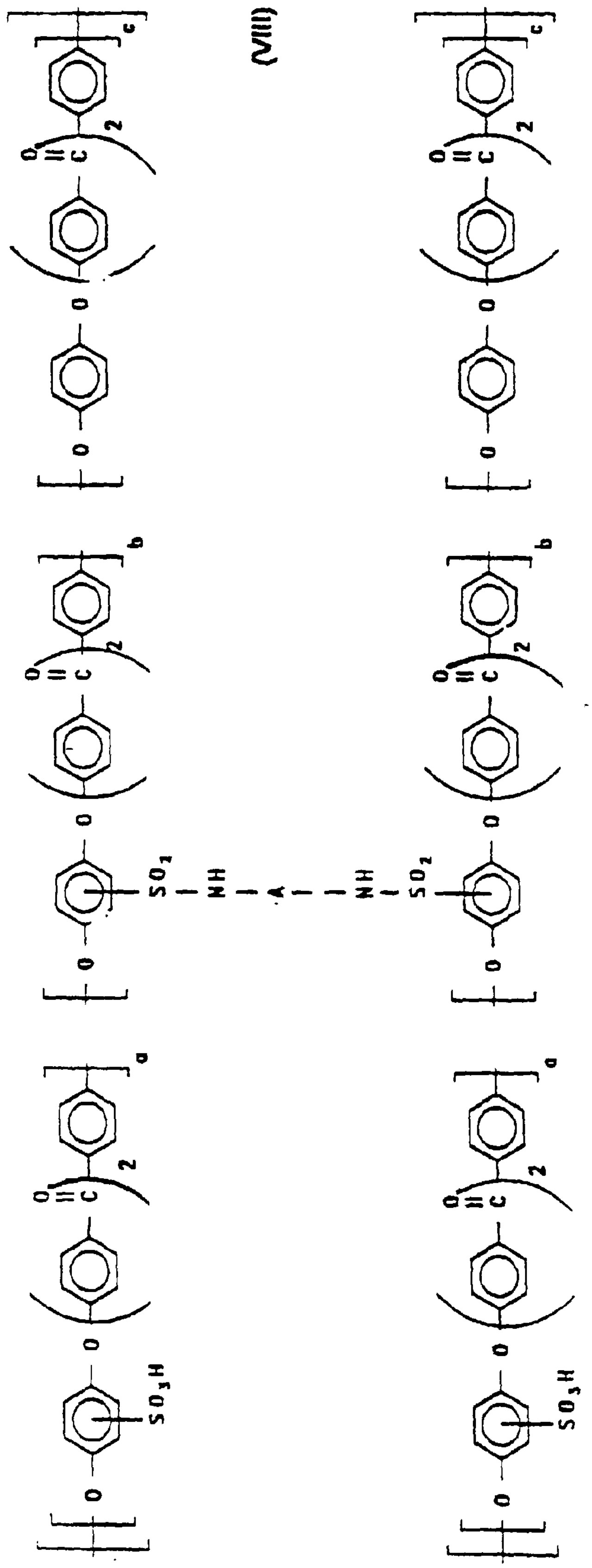

(VIII)

**13.** Membrane de polyélectrolyte selon la revendication 12, caractérisée en ce que A représente le reste de formule générale (IX)

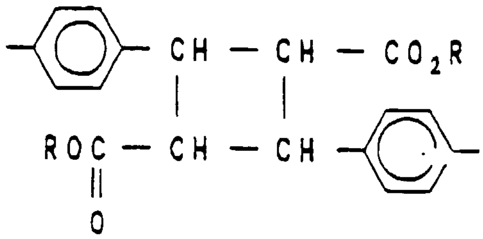

(IX)

où R représente un atome d'hydrogène ou un groupe méthyle.

**14.** Membrane de polyélectrolyte selon la revendication 12, caractérisée en ce que A représente le reste de formule générale (X)

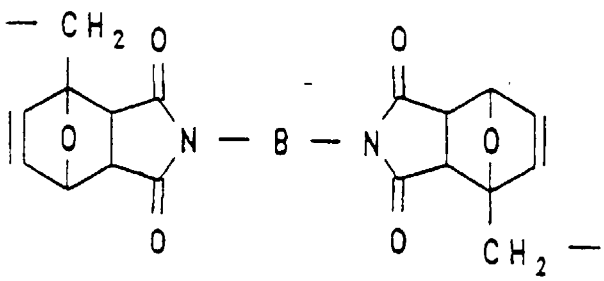

(X)

où B représente un reste bifonctionnel.

**15.** Membrane de polyélectrolyte à partir d'une polyéthercétone aromatique sulfonée, caractérisée en ce qu'elle est constituée

a) par un polymère réticulé par l'intermédiaire de ponts sulfonamido de formule générale (XI)

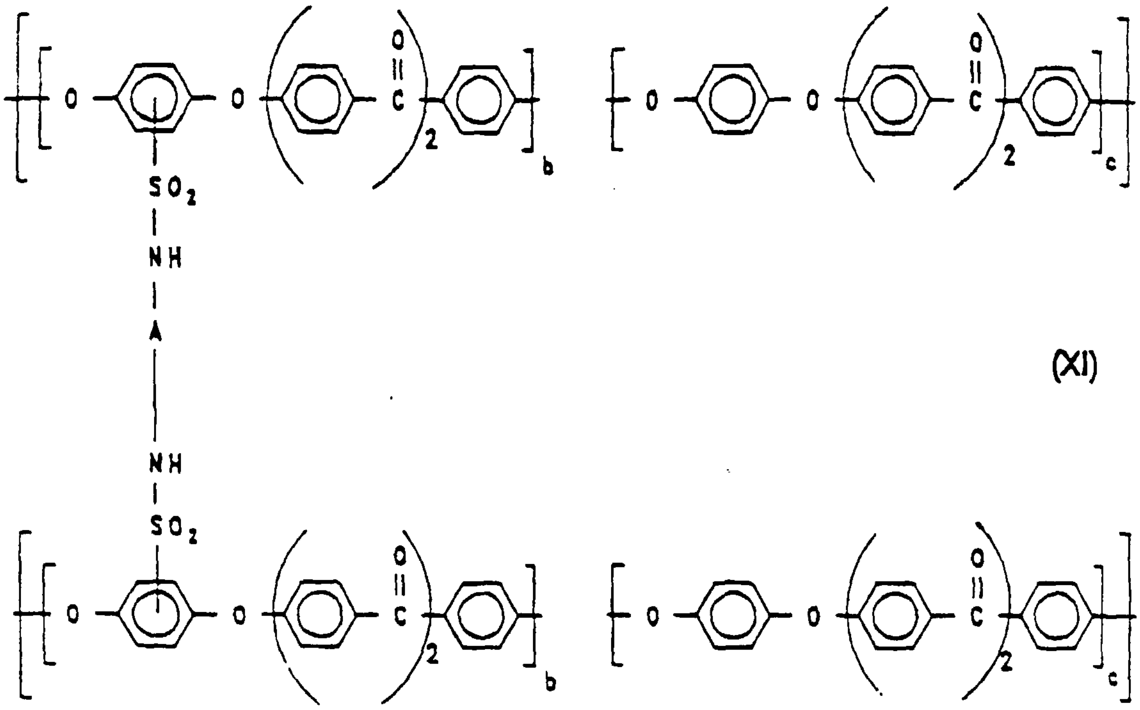

(XI)

dans laquelle b = 0,5 à 1, c = 0 à 0,5, b + c = 1 et A possède la signification donnée à la revendication 14 et b) par une polyéthercétone sulfonée de formule générale (I)

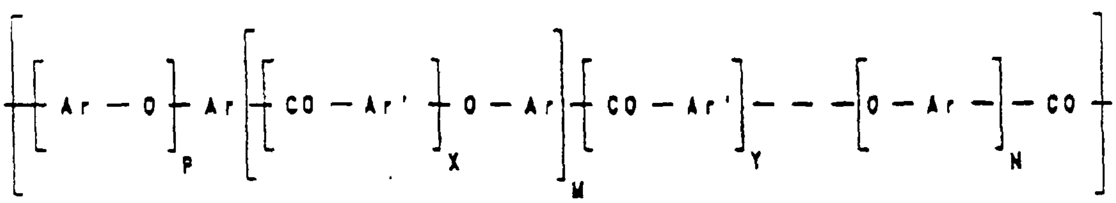

(I)

au moins 20% des motifs O-phénylène-O étant substitués par un groupe $SO_3H$, où Ar, Ar', X, N, M, Y et P possèdent les significations données à la revendication 1.

**16.** Mélange de polymères ayant une teneur en une polyéthercétone aromatique sulfonée, caractérisé en ce qu'il est constitué par l'acide sulfonique (II) et le sulfonamide (XII)

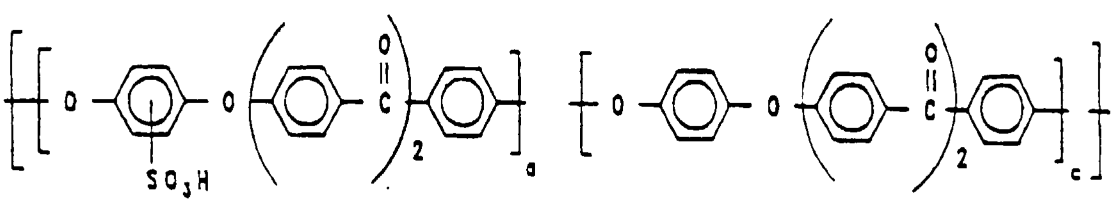

(II)

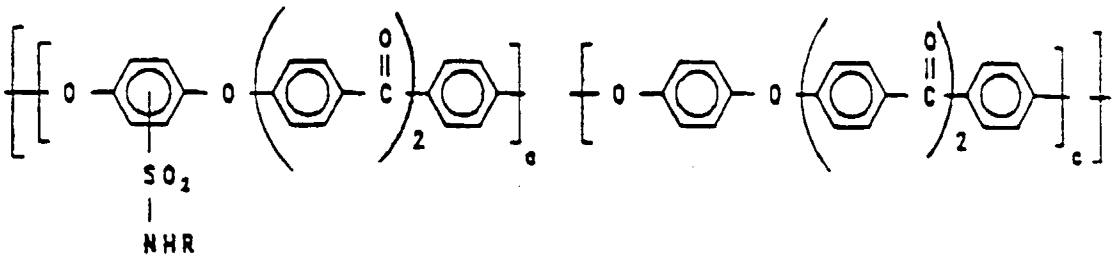

(XII)

où $NH_2R$ représente l'allylamine et l'acide p-amino-cinnamique et a = 0 à 1, c = 0 à 0,5 et a + c = 1.

**17.** Mélange de polymères selon la revendication 16, caractérisé en ce que le taux de (XII) étant de 0,5 à 25% en masse et de (II) de 75 à 99,5% en masse.